Europäisches Patentamt

European Patent Office

Office européen des brevets

(11) Publication number: **0 327 471 B1**

# EUROPEAN PATENT SPECIFICATION

(45) Date of publication of patent specification: **22.12.93**  (51) Int. Cl.5: **H04Q 11/04**, G06F 15/76

(21) Application number: **89400321.9**

(22) Date of filing: **03.02.89**

(54) **Device for processing telephonic signals comprising digital signal processing devices common to a plurality of subscribers lines.**

(30) Priority: **05.02.88 FR 8801386**

(43) Date of publication of application:
**09.08.89 Bulletin 89/32**

(45) Publication of the grant of the patent:
**22.12.93 Bulletin 93/51**

(84) Designated Contracting States:
**DE ES FR GB IT**

(56) References cited:
**EP-A- 0 216 488**
**WO-A-87/01547**

**ELECTRONIOUE APPLICATIONS, no. 50,
October-November 1986, pages 71-77, Paris,
FR; R. KANNENBERG: "La programmation de
microprocesseurs personnalisés"**

**TOUTE L'ELECTRONIOUE, no. 527, October
1987, pages 52-60, Paris, FR; L. MARY:
"Processeurs de performances"**

(73) Proprietor: **TEXAS INSTRUMENTS FRANCE
B.P. 5
F-06270 Villeneuve Loubet(FR)**

(84) Designated Contracting States:
**FR**

(73) Proprietor: **TEXAS INSTRUMENTS INCORPO-
RATED
13500 North Central Expressway
Dallas Texas 75265(US)**

(84) Designated Contracting States:
**DE ES GB IT**

(72) Inventor: **Chauvel, Gérard Les Vergers de Val
Constance
300 Chemin de la Suquette
F-06600 Antibes(FR)**

(74) Representative: **Obolensky, Michel et al
c/o CABINET LAVOIX
2, place d'Estienne d'Orves
F-75441 Paris Cédex 09 (FR)**

Rank Xerox (UK) Business Services
(3.10/3.6/3.3.1)

ELEKTRONIK, vol. 35, no. 12, 13th June 1986, pages 48-52, Munich, DE; H.-J. HINRICHS-MEYER: "Signalverarbeitungs-Chips mit Familienkonzept"

ELECTRONIC ENGINEERING, vol. 57, no. 698, February 1985, pages 53-56,59,63, London, GB; R. RICKVANCE: "A single chip digital signal processor. Part 1 - architecture and addressing"

ELECTRO/87 AND MINI/MICRO NORTHEAST, vol. 12, 1987, paper 27/3, pages 1-10, Conference Record, Los Angeles, CA, US; A. GOLDBERGER: "A high performance, easy to programm DSP for general purpose applications"

**Description**

In subscriber card systems for telephone exchanges, the circuits used for connecting two subscribers to one another to create a digital filtering function using dedicated digital processing circuits are called hereafter DSP. An example of a DSP device is described in U.S. Patent Nos. 4,577,282 issued March 18, 1986 and 4,491,910 issued January 1, 1985 and in European Patent Publication EP-A-0086307 published August 24, 1983.

DSP is generally controlled by a clock belonging to the exchange. This clock defines the calculation period.

WO-A-8 701 547 discloses, a device for processing telephonic signals for putting into communication a plurality of subscribers by means of a telephone exchange having circuits on cards of subscribers, comprising devices for processing digital signals adapted to produce filtering functions for the purpose of the connection of subscribers to one another said device comprising associated with said telephone exchange, at least two digital signal processing devices common to a plurality of lines of subscribers, each connected, on the one hand, to the telephone exchange, and, on the other hand, to a group of lines of subscribers and adapted to process the signals coming from said corresponding groups of lines of subscribers in shared time so as to effect the calculations of filtering functions associated with the various subscribers in accordance with the frequencies allocated to the calculations of stages of filters adapted to constitute said functions of filtering of said signals of subscribers.

With existing architectures, this clock is fast enough to process the calculation corresponding to the connection of the two subscribers.

Technological advances now make it possible to perform high-speed calculations, but this advantage cannot be used in existing architectures.

The aim of the present invention is therefore to create an architecture making it possible to use all capabilities of new integrated circuit technologies in terms of speed and to share a filter processing unit among several users.

The aim of the invention is also to create a system which can process, for example, eight or more subscriber channels for a silicon surface exceeding that of an DSP which processes only one subscriber channel.

The invention refers to a device for processing telephonic signals for putting into communication a plurality of subscribers by means of a telephone exchange having circuits on cards of subscribers, comprising devices for processing digital signals adapted to produce filtering functions for the purpose of the connection of subscribers to one another, and associated with said telephone exchange, at least two digital signal processing devices common to a plurality of lines of subscribers, each connected, on one hand, to the telephone exchange, and, on the other hand, to a group of lines of subscribers and adapted to process the signals coming from said corresponding groups of lines of subscribers in shared time so as to effect the calculations of filtering functions associated with the various subscribers in accordance with frequencies allocated to the calculations of stages of filters adapted to constitute said functions of filtering and chronology of reception of said signals of subscribers, characterized in that each digital device for processing signals common to a plurality of lines of subscribers comprises a compressor-expander circuit shared by said plurality of groups of lines and which is adapted to ensure the connection of the digital device for processing signals to the telephone exchange, a sequencer circuit controller by clock signals generated by the telephone exchange and by control signals which define the position of samples of signals of the various lines in a predetermined period of time and adapted to generate orders to calculate of the various filters for each of the lines of subscribers, a circuit for synchronizing the orders to calculate coming from the sequencer circuit, said synchronizer circuit being adapted to synchronize the orders to calculate relative to signals of a local clock and to generate input points of a CROM memory at the end of a calculation in process so as to determine the address of a first microcode of a sequence of microcodes contained in said CROM memory and corresponding to a following calculation to be effected, a central processing unit CPU controlled by the microcode bits of the CROM memory so as to effect various calculating operations as a function of the configuration of the microcode bits, said central processing unit being moreover connected to a memory of input data containing the samples on which the calculations must be carried out for each filter and to a memory of coefficients adapted to be allocated to the input data for the carrying out of said calculations of the filters relating to said lines of subscribers and an address processor connected, on one hand, to the CROM memory and, on the other hand, to said data memory and to said coefficient memory, said address processor being adapted to the management of the addresses of the data and of the coefficients and to select the addresses at which the data are located and to present said data to the central processing unit in the required order for effecting the corresponding filter

3

calculation.

The invention will be more clearly understood by reading the following description given in reference to the attached figures, provided for illustration only and in which:

- Figure 1 is a diagram showing how two subscribers are connected by a standard telephone exchange with subscriber cards;
- Figure 2 is a diagram showing how to share a digital signal processor of a circuit card off a telephone exchange among several subscriber lines;
- Figure 3 illustrates the filtering function regarding the shared digital part of the use of the digital signal processor;
- Figure 4 illustrates a Finite Impulse Response (FIR) filter used in the present invention;

Figure 5 is a block diagram of the internal architecture of a digital signal processor for creating the calculation function of the filtering and to process the sequencing of this calculation for a group of subscribers;

- Figure 6 is a block diagram of the CPU and memories associated with the latter, incorporated in the design of the digital processor of Figure 5;
- Figure 7 is a similar diagram to that of Figure 4 of a FIR filter with four coefficients or stages;
- Figure 8 is a timing diagram of the calculation operations for the filter of Figure 7;
- Figure 9 is a detailed block diagram of the address processor of the device of Figure 5;
- Figure 10 is a block diagram of the CROM memory incorporated in the design of the digital signal processor of Figure 5;
- Figure 11 is an illustration of a raster or thirty two time intervals and shows in detail the contents of a time interval;
- Figure 12 is a timing diagram of the calculations corresponding to a TI sample of a raster;
- Figure 13 is a diagram showing an example of a sample calculation sequence;
- Figure 14 is a partial block diagram of the sequencer which is part of the device of Figure 5;
- Figure 15 is a block diagram of the synchronizer belonging to the device of Figure 5;
- Figures 16a to 16c are timing diagrams representing the effect of the position of time intervals TI on the propagation time of the group of digital filters;
- Figure 17 is a diagram showing the link of a subscriber line with a digital signal-processing device creating a corresponding filtering function;
- Figure 18 is a diagram of the technique of delaying the calculation in terms of the sample acquisition used in another embodiment of the invention;
- Figure 19 is a block diagram of the CPU in another embodiment of the processing device according to the invention;
- Figure 20 illustrates a filter calculated by the CPU of Figure 19. There are stacks of as many registers associated with said terminals as there are channels to process;
- Figure 21 shows an algorithm for calculating the various filter components by the device according to the invention in which the technique of calculating several filter simultaneously is applied;
- Figure 22 is a diagram showing the circuit of a digital signal-processing device designed for the simultaneous calculation of eight channels;
- Figure 23 is a diagram showing the exchanges of the samples to be processed between the lines and the telephone exchange;
- Figure 24 is a block diagram of the sequencer or synchronizer of the device of Figure 22;
- Figure 25 is a diagram illustrating the functioning of the circuit of Figure 24;
- Figure 26 shows the layout of the part of the circuit of Figure 22 adapted to control the CROM memory;
- Figure 27 is a diagram depicting the address process of the device of Figure 22;
- Figure 28 is a diagram depicting the sequence of the microcodes of the CROM memory;
- Figure 29 is a diagram depicting the changing sequence of microcode;
- and Figure 30 is a diagram according to the time representing the successive execution of the microcodes in the device described in reference to Figures 22 to 29.

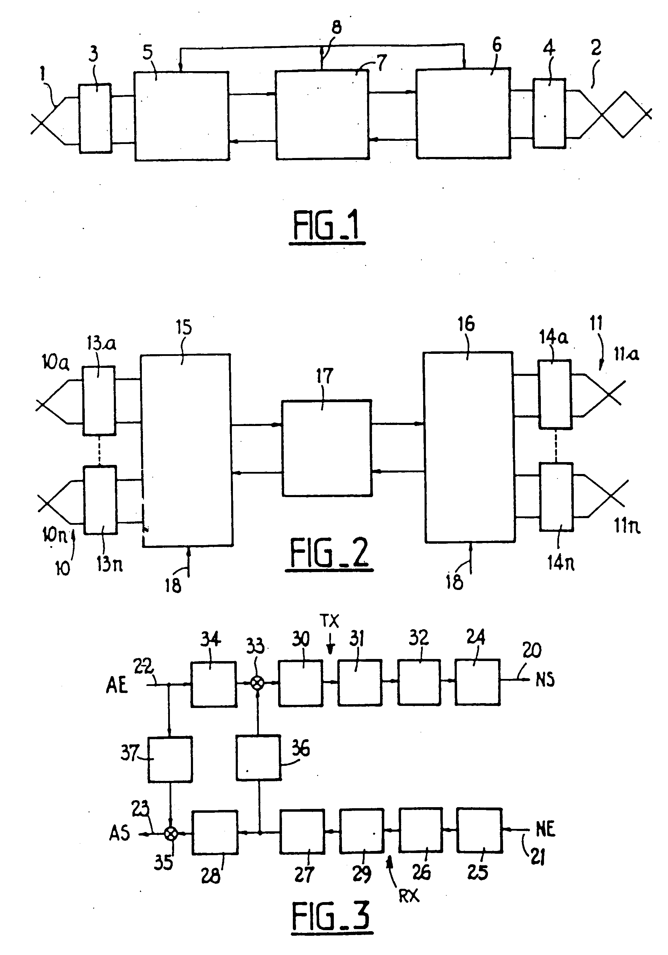

The diagram of Figure 1 is a standard connection diagram between two subscriber lines (1, 2).

Each of the subscriber lines (1, 2) is connected to corresponding line interface L/I (3, 4).

Each interface is connected to [one of] digital signal processors (5, 6).

Each digital signal processor or DSP creates the filtering and transformation of the output signal of corresponding interface (3, 4), into a digital signal. Processors (5, 6) are in turn connected to telephone exchange (7) which produces at one of its outputs (8) a 2 MHz clock signal which is the control signal of digital signal processors (5, 6).

This clock signal may sometimes be faster, but it is in any case not frequent enough to maximize the use of the speed capabilities of current DSP processor architectures.

In order to increase the processing speed and to therefore be able to share each DSP among several subscriber lines, a solution according to the invention consists of using a local high-speed clock.

A layout showing this solution is depicted in Figure 2.

The installation shown in this figure has two groups (10 and 11) of several subscriber lines (10a-10h and 11a-11n) connected via corresponding interface circuits (13a-13n, 14a-14n) to DSP processors (15, 16) common to each group of lines.

DSPs (15 and 16) are in turn connected to telephone exchange (17) and are controlled by local clock (18).

The samples which transit between each of DSPs (15, 16) and exchange (17) are at a frequency, for example, of 8 kHz, but they are synchronous with the clock signal frequency of 2 MHz from exchange (17).

Seen from the exchange, the processing should be synchronous with a frequency of 2 MHz from the exchange.

For this purpose, it is possible:

a) to generate a local high-speed clock signal using a phase locking system PLL and

b) to process the information with the local clock and to resynchronize the calculation results to the clock frequency from the telephone exchange.

The first solution which uses the phase locking system is certainly the simplest to achieve at the architectural level, since it allows the calculation to be shared using a synchronous method.

However, to increase the clock frequency from 2 MHz to 32 MHz, for example, phase locking system PLL must be provided, and this is virtually impossible at the aforementioned frequencies using new 1-$\mu$ CMOS technologies.

The second solution consists of using a local clock without phase relation with the clock of the exchange and of solving the problems of sharing the DSP and synchronously restoring the samples of signals using an adapted circuitry which will be described below.

However, before describing in detail the circuits using this second solution, we will describe, in reference to Figure 3, the calculation function which should be performed in the DSP to carry out the filtering.

Figure 3 shows the filtering function to be created regarding only the digital part which will share the use of the DSP.

The filter shown in this figure is part of one of the DSP (15, 16) and has two connections NE, NS (20, 21) connected to exchange (17) and two connections AE, AS (22, 23) connected to analog-digital or digital-analog (not shown) converters which are part of interface circuits (13a-13n, 14a-14n) (Figure 2).

This filter comprises compression unit (24) and expansion block (25) connected to the telephone exchange.

For example, each sample E applied to terminal (21) from the exchange and having a frequency of 8 kHz is converted into a digital signal of 8 to 14 or 16 bits according to a compression law known as law A or law $\mu$.

The same is true for the compression in the opposite direction.

Each decompressed sample of the receiving channel is processed by digital filters LP, R, and I (26, 27, and 28) which increase the sampling rate from 8 kHz to 32 kHz.

Filter LP (26) is an infinite impulse response IIR type of recursive type.

The receiving channel also has filter GR 29 placed between filters (26, 27).

The transmission channel has filter X (30), filter GX (31) and filter BP (32) connected in this order between adder (33) and compressor (24).

Filter BP (32) is of type IIR or recursive type like filter LP of the receiving channel.

All other filters are finite impulse response FIR type.

The transmission channel also has filter D (34) connected between adder (33) and terminal (22) whereas the transmission channel has adder (35) connected between filter I (28) and terminal (23).

Filter B (36) is placed between the transmission and receiving channels and is connected between the input of filter I (28) of the receiving channel and adder (33) of the transmission channel and filter Z (37) connected between the input of filter D (34) of the transmission channel and adder (35) of the receiving channel.

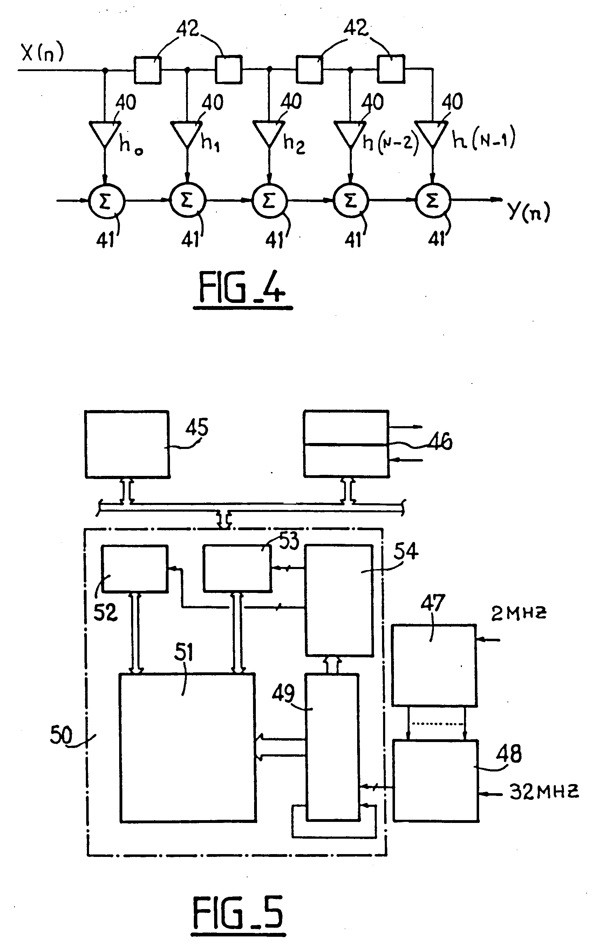

In Figure 4 we have shown finite impulse response FIR filter, defined mathematically by the relationship:

$$X(n-(N-1)).h(N-1) + ..... + X(n-2).h(N-2) + (n-1).h(N-1) + Xn. \, ho \; = \; Yn$$

N is the number of coefficients of the filter and n the chronological order of the signal samples to be processed, in which Xn is the input sample of the filter, X(n - 1) ... X(n - (N - 1) are the samples which were received during the preceding calculations.

Sample Xn is multiplied by its ho coefficient in multiplier (40), and the result is placed in accumulator (41).

Sample Xn - 1 received during the preceding cycle is multiplied by coefficient h(N - 1) in corresponding multiplier (40), and the result is added to the result of the Xn ho calculation in corresponding accumulator (41).

The preceding samples are combined with hoXn in the same way up to the oldest sample X(N - (N - 1), which is multiplied by its coefficient h(N - 1). The result is added to the sum of the preceding samples.

Yn is therefore the value contained in last accumulator (41) of filter FIR of Figure 4.

It is observed with this process that for each filter calculation N identical cycles must be formed, each one including a sample multiplication, accumulation and shift in associated delay circuit (42).

Table 1 below gives the number of coefficients of each filter of the circuit of Figure 3.

## Table 1

| | | | | | | | | | | |
|---|---|---|---|---|---|---|---|---|---|---|
| 8 KHz | LP | | | | | | | | | BP |
| 16 KHz | | GR | R | | | B | D+$\Sigma$ | X | GX | |
| 32 KHz | | | | I | Z+$\Sigma$ | | | | | |
| Nb coef | 13 | | 4 | 5 | 4 | 8 | 5 | 4 | | 18 |

The calculation of infinite impulse response IIR filter may be divided into that of two finite impulse response FIR filters with the following equations.

$$d(n) = xn + d(n-1) a1 + d(n-2) a2 ....$$
$$Y(n) = dnbo + d(n-1) b1 + d(n-2) b2 ....$$

in the diagram of Figure 3.

In these equations:

dn, dn - 1, dn - 2 are calculated values for each new x(n) value.

a1, a2, b1, b2 are coefficients of the various filter stages.

A sample which is received from the exchange is processed with LP (26) filter which generates result Yn (LP).

The amplitude of this sample is processed using the GR function. This result is used by filter R as a new sample Xn (R) to be processed and so forth.

The architecture of digital signal processor DSP which creates this function and processes the sequencing of the filter calculation for several subscribers will now be described in reference to Figure 5.

DSP represented in this figure has:

- input-output block I/O (45) which is not actually within the scope of the invention and which converts the digital samples into analog samples and vice versa to control the analog interface (Figure 2);
- compressor-expander (46) which is shared by the various channels and which makes it possible to connect the DSP with the exchange;
- sequencer (47) controlled by the clock of the exchange and by control signals which define the position of the samples of the various channels in a period of 8 kHz;
- and synchronizer (48) associated with sequencer (47) and receiving from the latter orders for calculating the different filters for each channel.

Synchronizer (48) receives calculation orders and synchronizes them relative to a 32 MHz calculation clock and generates an input point in CROM (49) memory which is part of DSP (50) itself when a current calculation is completed.

CROM (49) is in turn connected to central processing unit CPU (51) which communicates with RAM data memory (52) and RAM/ROM coefficients memory (53).

CROM (49) is also connected to address processor (54) for data and coefficient memory management (52, 53).

CPU (51), memories (52, 53), and address processor (54) are part of CROM (49) of DSP (50).

The input point generated by synchronizer (48) gives the address of a first microcode of a microcode sequence corresponding to a filter calculation.

CPU (51) is controlled by the microcode bits. According to the bit configuration, different operations may be carried out by central processing unit (51).

RAM data memory (52) contains N samples corresponding to each filter and coefficients memory (53) contains the coefficients corresponding to the calculation of N stages of a filter.

Address processor (54) manages the data addresses and coefficients to calculate each filter. It selects the addresses where the data items are located and introduces them to CPU (51) in the required order to perform the calculation for the equations described above.

We will now describe in more detail each of the blocks involved in the construction of DSP (50).

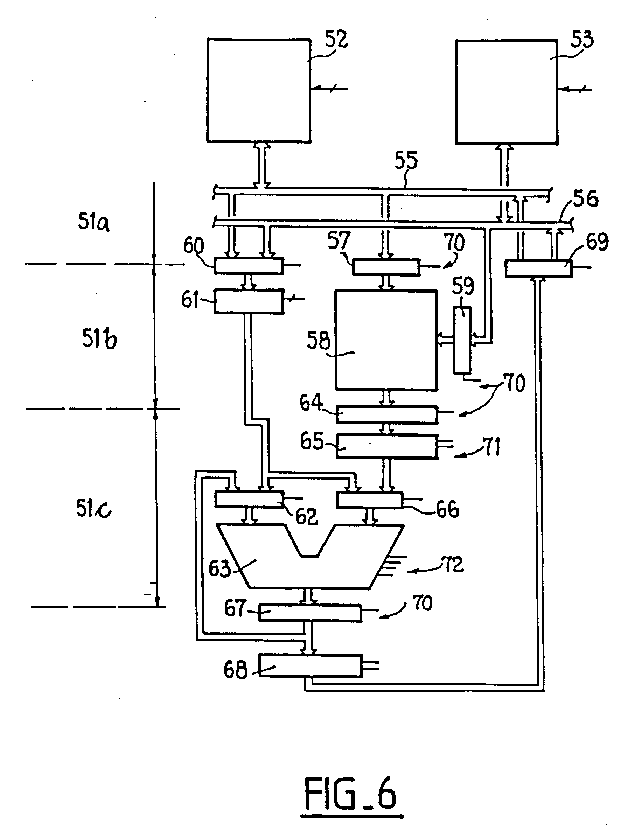

The central processing unit, or CPU (51), and the data and coefficient memories (52, 53) are depicted on the detailed diagram of Figure 6.

Central processing unit (51) is subdivided into reading portion (51a) and accumulation portion (51c) according to the diagram of the filter shown in Figure 4.

We have seen in reference to the latter that to perform a filter calculation, for each calculation step, a multiplication must be performed, followed by an addition with the previous result.

The selection for CPU is therefore shown on a pipeline architecture which has three stages:

1) Reading of a data item and a coefficient in memories (52) and (53).

2) Multiplication of the data item by the coefficient.

3) Addition of the result with the preceding result.

To accomplish this, reading portion (51a) of CPU (51) has data bus (55) and coefficient bus (56) respectively connected to memories (52 and 53).

Data bus (55) is moreover connected via shift register (57) to the input of multiplier (58), whereas coefficient bus (56) is connected via shift register (59) to another input of said multiplier (58).

Data bus (55) is also connected via multiplier (60), also connected to coefficient bus (56) to the input of register (61) whose output is connected via multiplier (62) to input A of arithmetic or logic unit (63) controlled by CROM (49) (Figure 5).

The output of multiplier (58) is connected via register (64) of coding logic (65) and multiplexor (66), also connected to register (61) to second input B of arithmetic and logic unit (63).

The output of the arithmetic and logic ALU unit (63) is connected to the input of accumulator (67), the output of which is connected to the input of multiplexor (62) and is connected via shift register (68) and multiplexor (69) to data bus (55) and to coefficient bus (56), and therefore to data memory (52) and to coefficient memory (53).

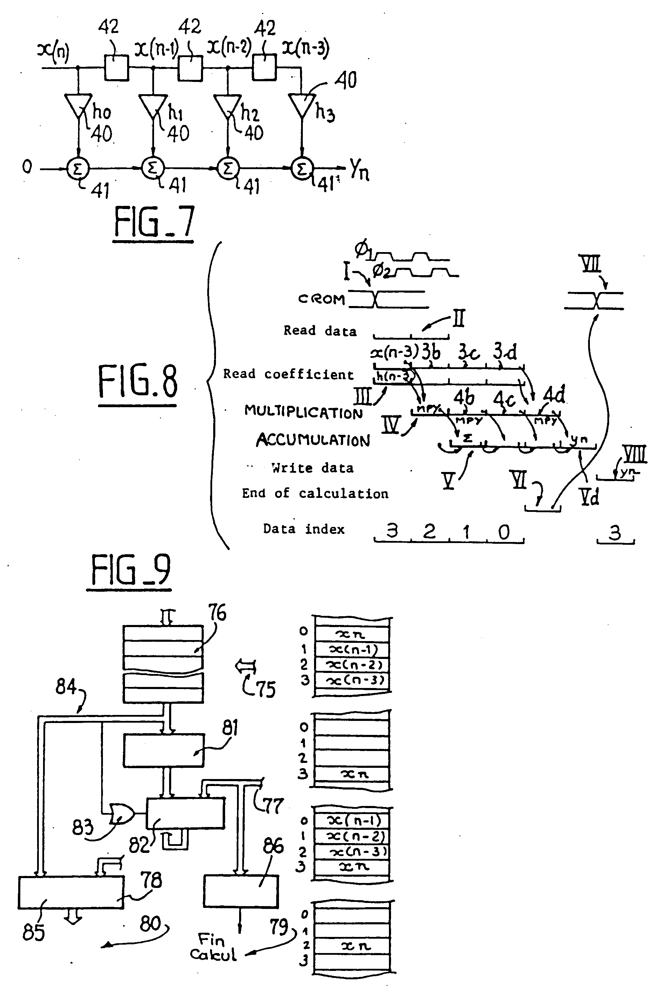

To explain the functioning of this part of the device of the invention, we will refer to the diagram of Figure 7 which represents a four-coefficient filter as well as to the timing diagram of Figure 8 representing the corresponding operations to be carried out.

The beginning of the calculation of the filter is determined by the input point of CROM (49) (Figure 5) which changes into I in Figure 8.

The input point is selected by synchronizer (48) (Figure 5) which will be described below.

The first operation consists of clearing accumulator (67) during two cycles indicated by II in Figure 8.

During first cycle III, the oldest sample is read in data memory (52) and the corresponding coefficient is read in coefficient memory (53).

Value $x(n - 3)$ of the filter of Figure 7 is loaded into register (57) by clock signal (70) and coefficient h3 is loaded into register (59) by this same clock signal (70).

During the next cycle represented by IV in Figure 8, multiplier (58) performs operation $x(n - 3) \times h3$, and the result is placed in register (64) under the control of clock signal (70). The result is possibly coded by logic (65) under microcode bit control (71) coming from CROM (49).

During the next cycle designated by V in Figure 8, the result of the multiplication is placed on input 9 of ALU (63), and accumulator (67) is placed in relation with input A of the latter.

CROM 49 (Figure 5) delivers to ALU (63) signals (72) for selecting function A + B so that ALU performs the addition of the values applied to inputs A and B.

The result of this addition is placed in accumulator (67). The latter is kept in cleared status during cycles III and IV. Result $x(n - 3) \times h3 + 0$ is placed in accumulator (67).

EP 0 327 471 B1

According to the same process, during cycles designated by IIIb, IIIc and IIId in Figure 8, the data and coefficient samples corresponding to the other terms of the filter calculation, are read in corresponding memories (52, 53).

The data and coefficients are multiplied among one another during cycles Vb, Vc, and Vd in accumulator (67).

At the end of the calculation of filter FIR with four coefficients of Figure 7, result Yn is available in accumulator (67).

Signal (79) coming from address processor (54) (Figure 5) and applied to CROM (49) indicates the end of the calculation and makes it possible to select a new microcode in CROM (49) to transfer it into data memory (52) of result Yn contained in accumulator (67).

During the cycle designated by VIII in Figure 8, the contents of the accumulator are placed in data bus (55) then are transferred into data memory (52) under the control of address processor (54).

Address processor (54) will now be described in reference to Figure 9.

The role of the address processor is to manage a storage area whose size depends on the number of coefficients of the filter to calculate, in a circular buffer.

Two data and coefficient memories (52, 53) may have their own address processor.

Address processor (54) receives from CROM (49):

- index register address (75) which selects one of 16 four-bit registers from stack (76);
- number (77) of calculation cycles to be carried out corresponding to the number of coefficients of the filter;
- and base address (78) of the storage area used for the data or coefficients.

The address processor generates:

- end of calculation EOC signal (79)
- and address (80) for accessing data memory (52) or coefficient memory (53).

Address processor (54) comprises index register stack (76), four-bit subtractor (81), connected to register stack (76) and useful for selecting either the output of substractor (81) or the number of cycles (77) under the control of logic circuit (83) which detects the zero value on bus (84) connecting register stack (76) to adder (85), and downcounter (86) which manages end of calculation EOC (79) signal.

Address processor (54) functions in the following manner.

It is assumed that the address processor generates an address sequence for a four-coefficient FIR filter like the one depicted in Figure 7.

For example, the following configuration is selected.

- Index register is selected at address 0. The four bits of field (75) are at zero.
- There are four coefficients in the filter to be calculated, and bit field (77) is equal to 00 11.
- Base address (78) is 1000 or > 8 in hexademical values.

When the circuit is initialized, the index register at address "0" of stack (76) was loaded with value 3.

At the beginning of the calculation cycle, downcounter (86) is loaded with the value of number (77) of cycles to be executed from CROM (49) (Figure 5).

The contents of the index register selected are placed on bus (84) and generate, with base address (78) coming from CROM (49), first address (80) which accesses data memory (52) or coefficient memory (53), via adder (78).

## The reading address is A = 1000

$$+ I = 0011$$

$$\text{----------}$$

$$1011$$

Depending on the process described above, the data item located at this address is placed in register (57) of the CPU and for the coefficient whose address is generated by an identical system (not shown) in register (59) (Figure 6)

During the memory access, the value of the index is processed by address processor (54).

I = m, = I - 1, value 2 obtained at the output of subtractor (81) is reloaded in index register.

Downcounter (86) is decremented.

During this cycle, the address processor has generated the addresses for accessing sample xn - 3 and coefficient h3.

8

During the two next cycles the index is equal to 2, then to 1,and is useful for accessing samples xn - 2 and xn - 2 to multiply them by coefficients h2 and h1.

At fourth cycle I = 0, the downcounter is also at zero. It generates the EOC signal which will stop the calculation sequence and allows the next microcode to transfer result Yn into data memory (52).

During the last access to sample xn, test logic (83) detects a zero status on bus (84) and generates a control signal from multiplexor (83), which allows the value of the number of cycles (77) to be reloaded into the corresponding index register of stack (76) rather than that leaving subtractor (81).

At the end of the calculation, the contents of the index register are equal to 3.

Generally, an overall filtering function is performed in several stages as shown in Figure 3.

For example, sample xn of filter R (27) comes from the result of calculating GR (29).

At the end of the calculation, GR will place its result which will become the next sample xn for the next calculation.

Since xn - 3 is the oldest sample, new sample xn takes its place in memory and xn - 2 becomes xn - 3, xn - 2 becomes xn - 2, etc.

As just observed, the calculation ends with 1 = 3. The index is therefore properly positioned for the phase in which sample xn is written in the storage area. During this transfer, I is decremented and points to position 2 which corresponds to sample xn - 3 for the next calculation.

We therefore see that there is first a recirculation of the index from value 3 to 0, then a sliding of the address of xn which allows the sample stack to be automatically managed.

CROM (49) memory generates all control signals of CPU (51) and of address processor (54). It also generates signals for executing a sequence of microcodes for implementing a calculation sequence, for example, followed by a result transfer.

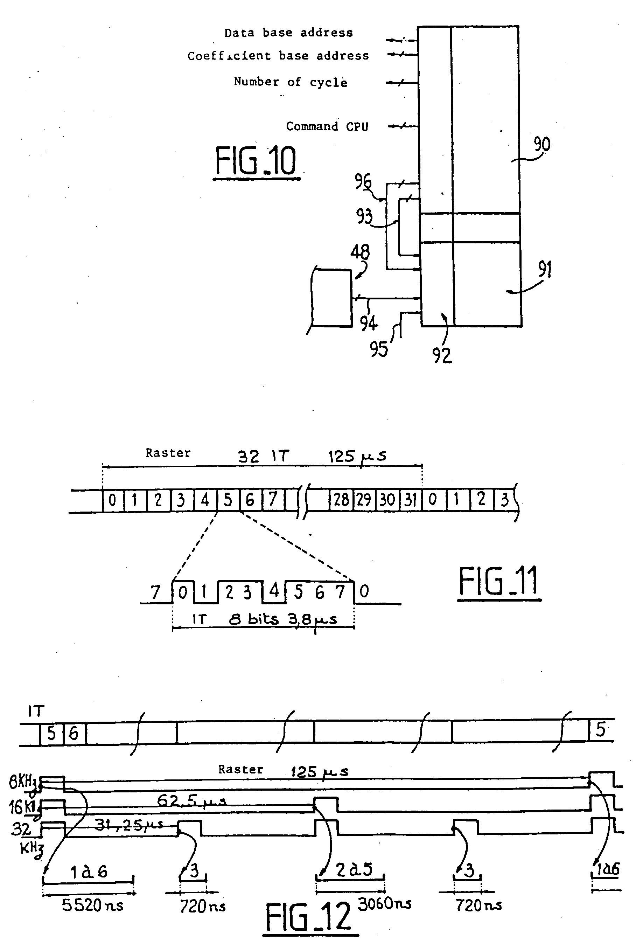

Figure 10 shows the diagram of CROM (49) which includes memory block of 48 microcodes to 48 bits (90), decoding block (91) for selecting one of the microcodes, selection logic (92) for selecting the next microcode to be executed as a function of selection signals (93).

Logic (92) is connected to synchronizer (48) (Figure 5) via channel (94). It also has flap signal input (95) and address input (96) by which it is connected to memory block (90).

A microcode sequence is carried out in the following manner.

The field of a microcode is shown below.

This microcode field includes the control bits of address processors (54), the control bits of CPU (51) and two address fields reserved for sequencing the microcodes.

When Mx 1 - 0 is equal to zero, addresses E5 to E0 are used for selecting the next microcode.

When Mx1 - 0 = 1, the microcode is selected by inputs E5 to E0 and by the EOC signal which allows $E_5 E_4 E_3 E_2 E_1$ 0 to be selected if EOC = 0, or $E_5 E_4 E_1$ 1 if EOC = 1.

Accordingly, depending on the EOC signal coming from address processor (54), a calculation sequence which ends with EOC can generate a result transfer cycle using another microcode.

When Mx 1 - 0 = 2, the two low-order bits E0 and E1 are replaced by A0 and A1 coming from CROM 49.

Finally, when Mx 1 - 0 = 3, six output bits A5 to A0 of CROM select the address of the next microcode to be executed.

It is assumed that we want to execute the calculation sequence on four coefficients and then save the result.

When the system in in wait status, the input point is at zero. Signals Mx 1 - 0 = 0 mean that for each cycle, the microcode selected is at address "000000." This microcode does not perform operations in CPU (51) and in address processor (54).

```
        Mx                    A
      ---------------------------------------------------------------
000000 | 0 | 0 | 0 | 0 | 0 | 0 | 0 | 0 | NOP  /|  NOP  //  |
      ---------------------------------------------------------------
  EOC*

       ----------------------------------------------------------
00100  |0| 0 | 1 | X | X | X | X | X | X |CALCU/|    Address
       ----------------------------------------------------------     Address
00100  |1| 1 | 1 | 0 | 0 | 0 | 0 | 0 | 0 |TRANSF.|
       ----------------------------------------------------------
  001010
```

When synchronizer (48) requests a calculation sequence, it generates the address of the first microcode which contains the bits permitting the management of CPU (51) and address processor (54).

Mx 1 - 0 + 1. Least significant bit LSB of the input point is replaced by the EOC* signal.

As long as EOC* is equal to zero, the calculation continues and the samples are read out of store, then processed according to the process described above.

At the end of the calculation, EOC* = 1 selects the microcode located at the next address of the input point. It contains the codes used for controlling the transfer of the calculation result to the selected address. Mx = 3 makes it possible to return to address "000000" and wait for the next calculation.

We will now describe in more detail the sequencing of the filtering operations and how to use the architecture according to the invention to increase its calculation capacity and allow several subscriber channels to be processed.

At the inputs and outputs of the telephone exchange, the data appear in the form of samples of 8 bits each with a rate of 8 kHz.

As shown in Figure 11, each sample forms time interval TI. Since the bit rate is 2.048 MHz, the interval lasts 3.9 $\mu$s. A raster contains 32 TI and lasts 125 $\mu$s (8 kHz). Each time interval (TI) corresponds to a sample for a subscriber.

When digital signal processor DSP receives a raster, it should know the position of interval TI to be processed and then perform the filtering function to generate an analog signal.

Similarly, the analog signals received are converted into digital signals, then processed by DSP to be restored in the outgoing raster at interval position TI defined by the exchange.

The digital samples exchanged with the exchange corresponding to connections NE and NS of Figure 3 have a repetition rate of 8 kHz, or once per raster.

On the line side, the samples are exchanged on terminals AE and AS at a rate of 32 kHz to be processed by decimation filters for AE and interpolation filters for AS.

Terminal AE (22) is connected to a digital-analog converter, and terminal AS is connected to analog-digital converter.

In the filtering sequence of NE to AS, filter OP (26) functions at 8 kHz, i.e., there is only one calculation in a raster (Figure 11).

Filters GR (29), R (27) and B (36) function at 16 kHz, so that there are two calculations per raster, and filter I (28) functions at 8 kHz.

In the filtering sequence of AE to NS, filter Z (37) functions at 32 kHz, filters D, X, and GX (34, 30, and 31) function at 16 kHz, and Filter BP functions at 8 kHz.

Compared to the position of samples NS or NE in a raster, there are therefore calculations at 8, 16, and 32 kHz which should be divided in the raster.

We will now examine how to divide the calculations in a raster as a function of the rates and filters.

Table 2 below shows how the different filter calculations are combined as a function of the rates and calculation times as a function of the number of coefficients.

The calculations for the filter shown in Figure 3 are combined in six categories.

10

| 1. LP | Rate 8 kHz, | duration 1140 ns |
|-------|-------------|------------------|
| 2. GR + R | Rate 16 kHz, | duration 720 ns |
| 3. I + Z + Σ | Rate 32 kHz, | duration 720 ns |
| 4. B + D + Σ | Rate 16 kHz, | duration 960 ns |
| 5. X + 6x | Rate 16 kHz, | duration 660 ns |
| 6. BP | Rate 8 kHz, | duration 1320 ns |

## Table 2

| 8 KHz | LP | | | | | | | BP |
|-------|-----|----|----|----------|---|---|---|----|
| 16 KHz | | 6R | R | | B+D+Σ | X | 6X | |
| 32 KHz | | | | I+Z+Σ | | | | |
| Nb coeff | 13 | | 4 | 5+4 | 8+5 | 4 | | 18 |
| Nb μCodes | 4 | 2 | 3 | 3 | 3 | 2 | 2 | 4 |
| Nb Cycles | 19 | 4 | 8 | 12 | 16 | 7 | 4 | 22 |
| Time (ns) | 1140 | 240 | 480 | 720 | 960 | 420 | 240 | 1320 |
| | 1 | 2 | | 3 | 4 | 5 | | 6 |

### The duration of a cycle is TC = 60 ns

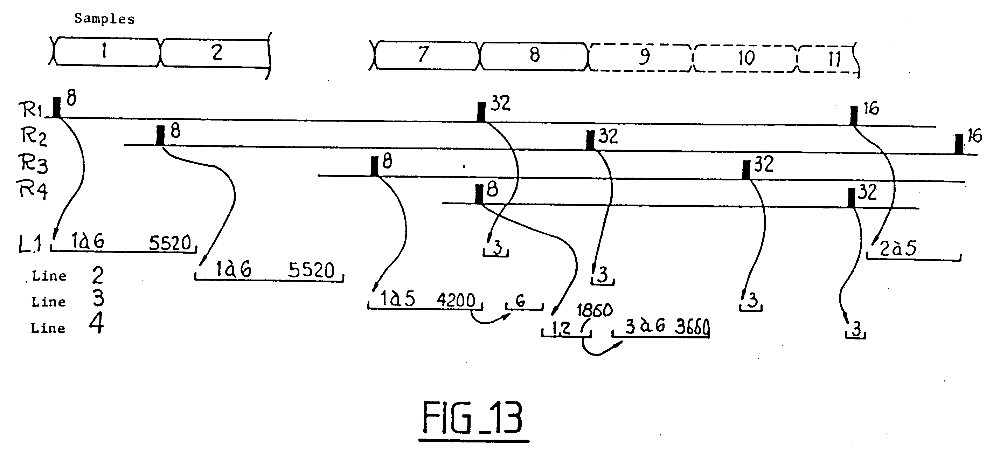

As shown in Figure 12, when the sample of time interval TI5 is received for processing, the request for calculating at 8 kHz triggers a calculation or sequence corresponding to filters (1-6) of Table 2 above. This calculation lasts 5520 ns.

After a quarter of a raster, i.e., 31.25 s, calculation (3) performs the filtering at 32 kHz. Likewise, at mid-raster, i.e., after 62.5 s, calculations 2 to 5 are performed for filtering 16 kHz and finally a calculation at 32 kHz while sequence 3 remains at 93.75.

We therefore see that the calculations corresponding to a sample or time interval TI are distributed in time to positions corresponding to the filtering rates.

We also see that the calculation time for a subscriber also uses part of the calculation capacity of the CPU, i.e., 10.2 $\mu$s every 125 $\mu$s.

There is therefore a calculation capacity corresponding to 125/10.2 = 12 subscribers with the machine cycle times allowed by current integration technology.

We will therefore see how the calculation capacity is shared by several subscribers knowing that certain calculations are more critical owing to the short feedback time required by a proper operation of the system.

We see in Figure 3 that two filters 2 and B (37) and (36) connect the receiving and transmission branches.

The loop containing filter Z is determining, since it is used to adapt the line impedance. Its feedback time should be short to prevent oscillations.

The same is true for filter B which is the balance between the transmission and reception. If its feedback time is too long, there are risks of echoing.

The calculations of filters Z and B are therefore given priority, and the corresponding calculation request should possibly interrupt an excessively long calculation sequence.

An example of a calculation sequence will now be described in reference to Figure 13.

When sample (1) is present, calculation request R1 corresponding to a filtering at 9 kHz is generated by sequencer (47) (Figure 5).

There is no calculation in progress; therefore, calculation cycle 1-6 is triggered.

Sample 2 is introduced after time interval TI of 3.9 $\mu$s.

11

Since the previous calculation is not completed, calculation request R2 cannot be executed immediately with the same priority level since R1 is anterior.

When sample (7) arrives, no calculation is in progress. Request R3 at 9 kHz is executed immediately.

When sample (8) corresponding to the fourth channel to be processed and to one-fourth of raster (32) TI appears, two calculation requests appear at the same instant:

- a calculation request at 32 kHz of line 1 and new request R4 at 9 kHz.

Since the calculation at 32 kHz takes priority, request R1 interrupts the calculation of line (3) at the end of the calculation corresponding to filtering (5), i.e., 4000 ns after the appearance of sample (7).

When the calculation of line (1) is completed, that of line (3) continues since request R4 at 9 kHz is posterior.

The same applies to the next sample: the calculation cycle of line (4) is interrupted by calculating 32 kHz of line (2).

The priority rule is the following.

The priority orders as a function of the calculation rates are:

1) Calculation at 32 kHz (3)

2) Calculation at 15 kHz (2-5)

3) Calculation at 8 kHz (1-6)

When two requests or more, of equal priority, or in conflict, the oldest request has priority.

When a calculation should be interrupted, this can only take place at the end of a full sequence 1, 2, 3, 4, or 5.

The position of time intervals TI1-TI4 is determined by the telephone exchange via a management system (not shown).

Sequencer (47) (Figure 5) which receives these signals TI1 to TI4 and clock signals at 2 MHz of the exchange has the role of generating calculation requests for each filtering rate. The requests are correlated in time to the duration of a raster as shown in Figures 12 and 13.

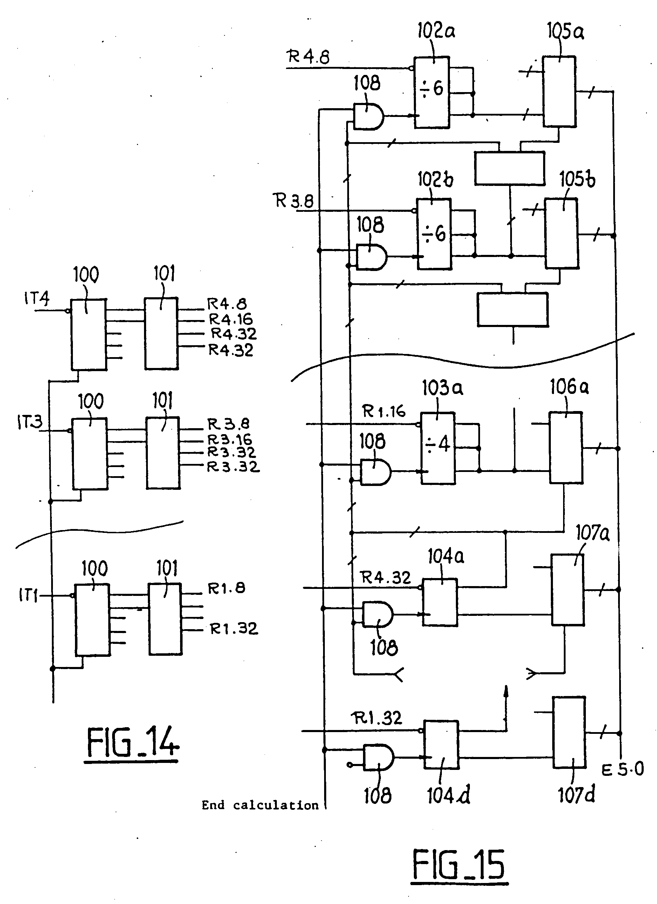

The requests corresponding to a subscriber are generated by counter (100) and decoder (101) which are part of sequencer (47) shown in Figure 14. Decoder (101) is initialized by corresponding signal TI. It divides each request into its elements at 8, 16, and 32 kHz.

After requests R4 to R1 are divided into their elements by sequencer (47), they are transmitted to synchronizer (48) which records them, managing their priorities and queuing the low priority calculations.

As we can see in the diagram of Figure 15, requests R4.8-R1.8 each initialize a divider by six (102a-102d) for generating the input points of CROM (49) (Figure 5) corresponding to calculations 1-6.

Requests R4.16-R1.16 each initialize a divider by four (103a-103d) which makes it possible to generate the input points of CROM (49) corresponding to calculations 2-5.

Requests R4.32 to R1.32 each initialize flip-flop (104a-104d) for calculations at 3 to 32 kHz.

On the same diagram of Figure 15, the highest-priority channel is channel R1.32 and the lowest-priority channel is channel R4.8. This priority is established as indicated above, by the rate of the calculation to be performed and by the chronology in which the samples appear.

It is assumed that a request is recorded by flip-flop (104d). Signal (52) coming from the output of flip-flop (104d) other than that connected to decoder (107d) will be applied to flip-flops (104a-104c) and to dividers (102a and 103a-103d) via gates (108) with two inputs which receive at their other inputs end of calculation EOC signal coming from address processor (54) and prevents the low-priority channels for operating and inhibits decoders (105a-105d), (106a-106d) and (107a-107d), associated with the different dividers, except for that (107d) of the channel selected which generates its code at the input of CROM (49).

When end of calculation EOC signal in progress is generated by address processor (54), the code of CROM (49) is handled and calculation (3) of channel R1.32 is executed. Flip-flop (104d) is returned to its neutral state.

If during this period one of the lower priority channels was in operation, for example channel R4.8, the generation of the CROM input points of this channel stops after calculation (2) to insert calculation (3) of the priority channel as shown in Figure 13.

During the execution of a channel, it is the EOC signal which advances the calculation address counter.

In all decoders (105a-107d), there are three bits to determine the number of the calculation to be performed and three bits to select the number of the channel under consideration.

The device just described makes it possible to perform the calculations of several filters during the span of a raster of several time intervals, provided that the requests for channels of the various subscribers do not reach the device during different time intervals TI.

Conversely, problems appear if several requests for channels take place in the same time interval TI.

It is assumed that the device is to process eight channels, for example, and that in the worst case, the requests for channels 1-8 take place in the same TI position.

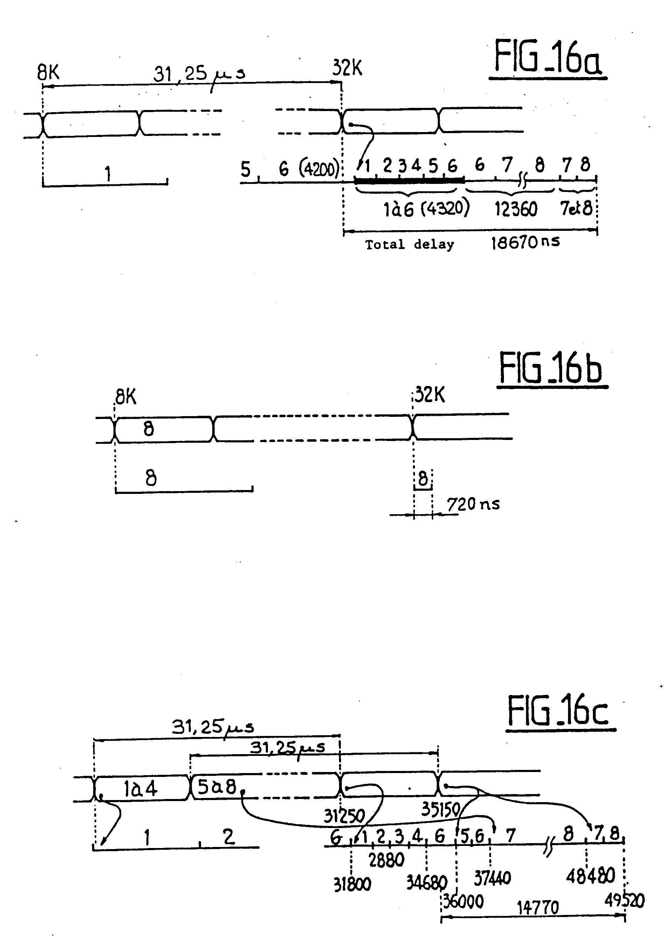

As we can see in Figure 16a, these requests for channels (1-8) appear on the TI interval so that the calculation of the filters associated with these eight channels is triggered on the 8-kHz signal.

After a quarter of a raster, i.e., 31.25 $\mu$s, the request for a high-priority calculation at 32 kHz of the first channel arrives, whereas the calculation of the sixth channel, which starts at 27600 ns and ends at 33120 ns is in progress.

It is interrupted at the end of the filter calculation, i.e., after 4200 ns.

The calculations of channels 1 to 6 are therefore inserted and the calculations at 8 kHz can continue.

Finally, the two last calculations at 32 kHz are performed.

There is therefore a 18670-ns delay to end the calculation of channel 8 relative to the request.

It is assumed, however, that all the subscribers hang up, except that of channel 8.

There is no delay caused by channels 1-7 of the calculation at 8 kHz and the calculation of channel 8 at 32 kHz is performed immediately.

The position of the calculation of channel 9 may therefore vary between 18670 ns and 720 ns.

As shown in Figure 16c in the case of an organization in which only four time intervals TI may occur at the same instant, if eight requests occur on two consecutive time intervals the total delay of the last calculation at 32 kHz becomes 14770 ns, and if channels 1-7 hang up, it is 720 ns.

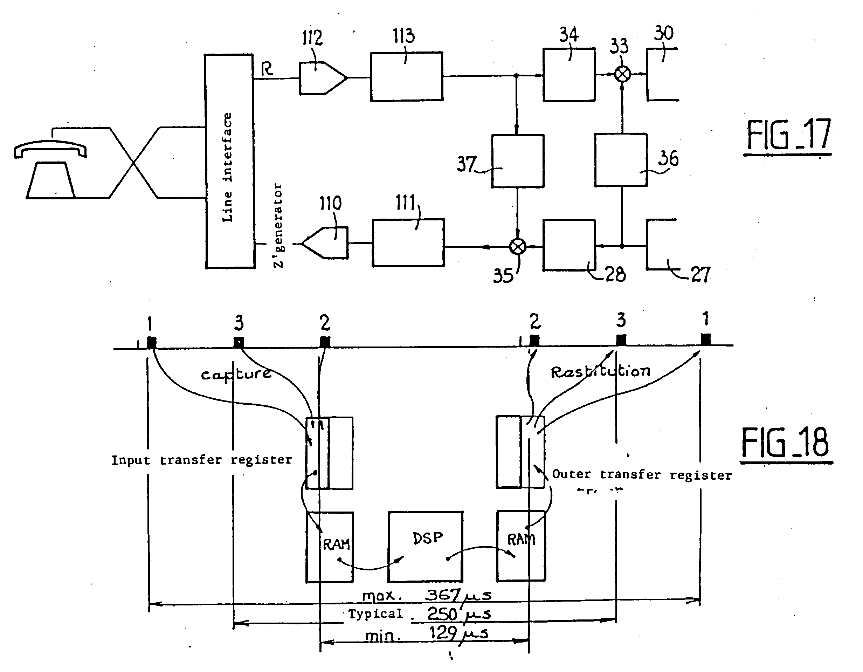

As shown in Figure 17, each subscriber line has impedance Z of the order of 600 $\Omega$, whereas the part with digital-analog converter (110) and interpolation filter (11) has generator output impedance Z'.

The voltage measured on terminal R of the line interface and converted into a digital value by analog-digital converter (112) therefore depends on the impedance ratio, and there is a return of the signal injected into the line on the measured signal.

The balance of anti-echo filter makes it feasible to take part of the signal transmitted to the line and subtract it by adder BD (333) from the signal received
- in the impedance ratio Z/ Z + Z',
- with a delay corresponding to the loop.

Filter Z (37) makes it possible to synthesize the line impedance so that generator output Z' is adapted to line impedance Z.

In the relative cases of introducing eight channels on same time interval TI or four time intervals at the same time described above, the total delay is always shorter than a clock period of 32 kHz.

Since the calculation results are considered in the next raster cycle, there is no problem of a group delay.

Conversely, the management of the calculation position as a function of that of time interval TI leads to a complex logic, due to the fact that the calculations can be interrupted.

In order to correct this drawback, in the management of time interval TI rasters, which is carried out by a concentrator, a three-phase method is applied:
- Capturing the samples in raster N,
- Calculating the filtering in the next raster N + 1, and
- Restoring the samples in raster N + 2.

The main advantage of this technique is that the calculations are performed at predetermined positions and make it possible to optimize the calculation time and be independent with respect to the sample position.

On the other hand, the delay between the capturing of a sample, the position of which is defined by the number of time interval TI and its readout in another number may vary with the respective positions of the samples between 129 $\mu$s and 367 $\mu$s.

With a more complex management of the input and output registers, it is possible to reduce this time to 250 $\mu$s.

The diagram of Figure 18 show the features offered by the aforementioned technique and used for implementing the device according to the invention. Below we shall see input and output register stacks connected to the terminals of the portion of the device used for creating the filtering functions.

In order to examine the management of the input and output register stacks, a calculation process to be adopted should be determined.

The general diagram of the digital signal-processing device is the same as that described in reference to Figure 5.

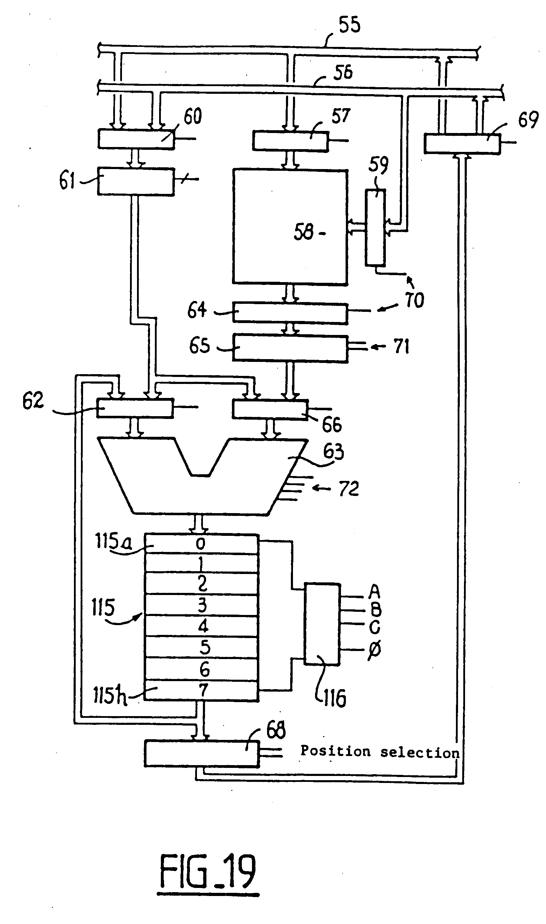

This device has a central processing unit shown in Figure 19. This CPU is similar to that described in reference to Figure 6, but rather than a single accumulator (70) associated with the arithmetic and logic unit, it has as many accumulators (115) as there are channels to be processed, i.e., eight in the present example.

The operation of the digital signal-processing device comprising the central processing unit in Figure 19 is the same as that of the device of Figure 3, but in this case, each operation that takes place during the calculation of a filter is repeated eight times.

Address processor (54) (Figure 3) reads out from data memory (52) eight consecutive samples and from coefficient memory (53) eight coefficients, if they are not identical.

The samples are multiplied in turns by the coefficients, and the results are placed in eight accumulators (115a-115h) at the output of arithmetic and logic unit (63).

At the end of the calculation of eight filters, the results are stored in data memory (52).

Accumulator stack (115) is connected to an eight divider (116) initialized by the beginning of the delivered calculation of addresses A, B, and C, thus making it possible to successively validate the eight accesses during the calculations.

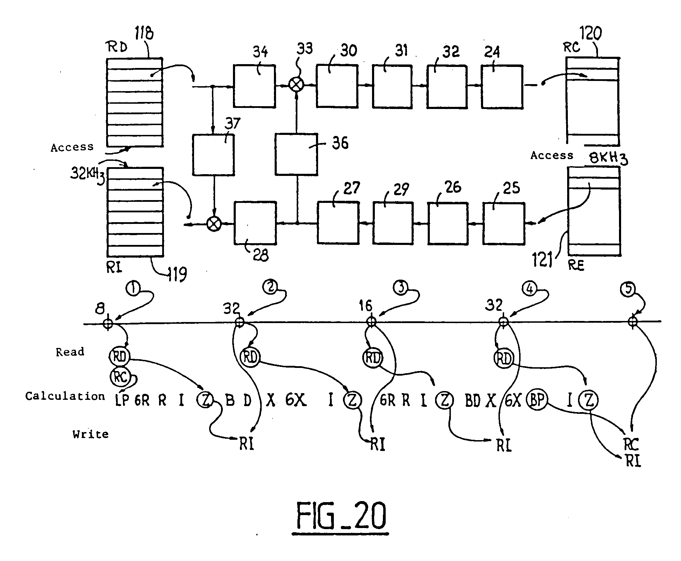

As shown in Figure 20, each terminal of the quadripole formed by the filtering block shown in Figure 3 is connected to a stack of eight registers RD (118), RI (119), RC (120), and RAE (121) in which the samples corresponding to the filtering calculation rate is 8 kHz by registers RC and RE and 32 kHz by registers RD and RI.

Compressed samples E are read in stack RE (121) to calculate filters LP, GR, R, and I.

At instant 1, the samples of stack RD are read to calculate line impedance Z.

The result is placed in stack RI to be used in the next 32-kHz cycle, then the calculation continues with BP, X, and GX.

For the other instants 2, 3, 4, and 5 of the raster, the principle is the same. For each 32-kHz period, the RD samples are processed and restored in the next cycle.

The RE samples connected at the beginning of the raster are restored in stack RC (120) at the end of the raster.

Filter LP is a low-pass filter with 13 coefficients operating at 8 kHz (IIR).

As already indicated above, filter IIR is defined by the relationships:

$$d(n) = x(n) + a1d(n-1) + a2d(n-2) + \;\text{---}\; a6d(n-6)$$
$$y(n) = b0dn + b1d(n-1) + b2d(n-2) \;\text{----}\; b6d(n-6)$$

The first operation of the calculation of d(n) consists of transferring the samples received in stack RE (121) to accumulator (115) at the corresponding positions.

In order to keep the same cycle in the calculation of d(n), x(n) is multiplied by a0 = 1 which does not exist in the filter relationships.

The same cycle is chained for the calculations with coefficients a1 to a6 coming from coefficient memory (53) (Figure 5) which are multiplied by the results of the calculations of d(n) of the preceding cycles: d(n - 1) to d(n - 6).

At the end of the calculation, the d(n) values for channels 0-7 are available in all accumulators 115a-115h.

To transfer the dn values into data memory (52), eight extra cycles are needed.

The write addresses are generated by address processor (54).

To calculate d(n):

8 cycles are necessary to transfer RE0-RE7 in accumulator (115);

8 cycles per coefficient, i.e., 6 x 8 cycles;

2 cycles due to the pipeline;

8 cycles to transfer the contents of accumulators (115a-115h) into data RAM memory (52).

For the second part of this filter calculation, y(n) must be calculated with the d(n) values multiplied by the corresponding coefficients.

The number of cycles needed for this second part is 66 for eight channels.

Consequently, to calculate yn on eight channels, it is necessary for:

66 x 2 = 132 cycles.

Since the duration of a calculation cycle is 60 ns, the time needed to perform a complete calculation is:

60 x 132 = 7920 ns.

In the case described in reference to Figures 1-15 in which the calculation is performed independently by channels, the total calculation time is 1140 x 8 = 9120 ns.

For the other calculations, the pipeline principle is equivalent except for filters IZ and BD which are grouped so that the additions of the results IIZ and BD are done directly without first accessing the data memory.

In the following table, the filter calculation time is given for eight channels simultaneously.

### Table with 8 channels

```
 ------------------------------------------------------------------------
 8KHz   RE   LP                                                 BP   RC
 16KHz            GR   R                       BD   X    6X
 32KHz                     RD   I/Z  RI
 ------------------------------------------------------------------------
 coeff.      13        4        5+4       8+5  4              18
 ------------------------------------------------------------------------
 μcode  1    4    2    2    1    3    1    3    2    2    4    1
 ------------------------------------------------------------------------
 nb.
 cycles 0   132   18   42   8    82   0   114   42   18  164   0
 ------------------------------------------------------------------------
 Temps      7920  1080 2520 480 4920     6840 2520 1080 9840
 ------------------------------------------------------------------------
```

The access to register RE (121) (Figure 20) takes place during the calculation of LP.

The transfer of RI takes place at the end of the calculation of Z rather than transferring it into the data memory.

The transfer into register RC (120) takes place at the end of the calculation of BP.

The calculation resource used is the following.

60 ns [x{number of cycles RE + LP + BP + RC) + 2x (number of cycles GR + R + BD + X + BX) + 4X (number of cycles RD +I/Z +RI)] = 67440 $\mu$s.

This duration constitutes 54% of the capabilities of central processing unit CPU.

If the same process were used for sixteen channels rather than eight, the calculation time would be 129.12 $\mu$s.

A clock with a time cycle of 58 ns allows sixteen 125-$\mu$s channels to be processed, i.e., in the time interval of a raster.

The sequence of the calculation operations of the various stages of a filter is given in the following table.

| FILTER | | OPERATION | SOURCE 1 | SOURCE 2 | DEST. | Nb CYCLES |
|---|---|---|---|---|---|---|
| **Entry point** | | | | | | |
| LP | 1 | MAC | RE | COEFF 1 | ACCU | 8 |
| | 2 | MAC | DATA LP | COEFF LP | ACCU | 48 |
| | | Pipeline | | | | 2 |
| | 3 | Transf. | ACCU | | DATA (LP) | 8 |
| | 4 | MAC | DATA LP | COEFF LP | ACCU | 56 |
| | | Pipeline | | | | 2 |
| | 5 | Transf. | ACCU | | DATA (6R) | 8 |
| **Entry point** | | | | | | |
| GR | 1 | MAC | DATA GR | COEFF GR | ACCU | 8 |
| | | Pipeline | | | | 2 |
| | 2 | Transf. | ACCU | | DATA (R) | 8 |
| R | 1 | MAC | DATA R | COEFF R | ACCU | 32 |
| | | Pipeline | | | | 2 |
| | 2 | Transf. | ACCU | | DATA (I) | 8 |
| | 3 | Transf. | ACCU | | DATA (8) | 8 |
| **Entry point** | | | | | | |
| ZI | 1 | Transf. | RD | | DATA (Z) | 8 |
| | 2 | Transf. | RD | | DATA (0) | 8 |
| | 3 | MAC | DATA Z | COEFF Z | ACCU | 32 |
| | 4 | MAC | DATA I | COEFF I | ACCU | 40 |
| | | Pipeline | | | | 2 |
| | 5 | Transf. | ACCU | | RI | 8 |
| **End of sequence** | | | | | | |
| 8D | 1 | MAC | DATA D | COEFF D | ACCU | 40 |
| | 2 | MAC | DATA 8 | COEFF 8 | ACCU | 64 |
| | | Pipeline | | | | 2 |
| | 3 | Transf. | ACCU | | DATA (X) | 8 |
| X | 1 | MAC | DATA X | COEFF X | ACCU | 32 |
| | | Pipeline | | | | 2 |
| | 2 | Transf. | ACCU | | DATA (6X) | 8 |
| 6X | 1 | MAC | DATA 6X | COEFF 6X | ACCU | 8 |
| | | Pipeline | | | | 2 |
| | 2 | Transf. | ACCU | | DATA (8P) | 8 |
| 8P | 1 | MAC | DATA 8P | COEFF 8P | ACCU | 72 |
| | | Pipeline | | | | 2 |
| | 2 | Transf. | ACCU | | DATA (8P) | 8 |
| | 3 | MAC | DATA 8P | COEFF 8P | ACCU | 72 |
| | | Pipeline | | | | 2 |
| | 4 | Transf. | ACCU | | RC | 8 |

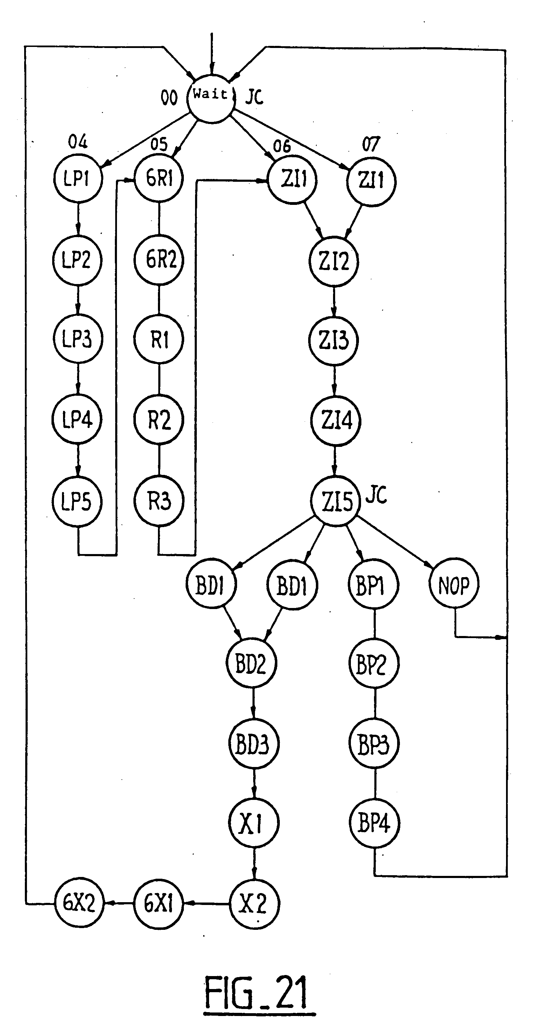

The sequence of the calculation operations given in the aforementioned table is shown in Figure 21.

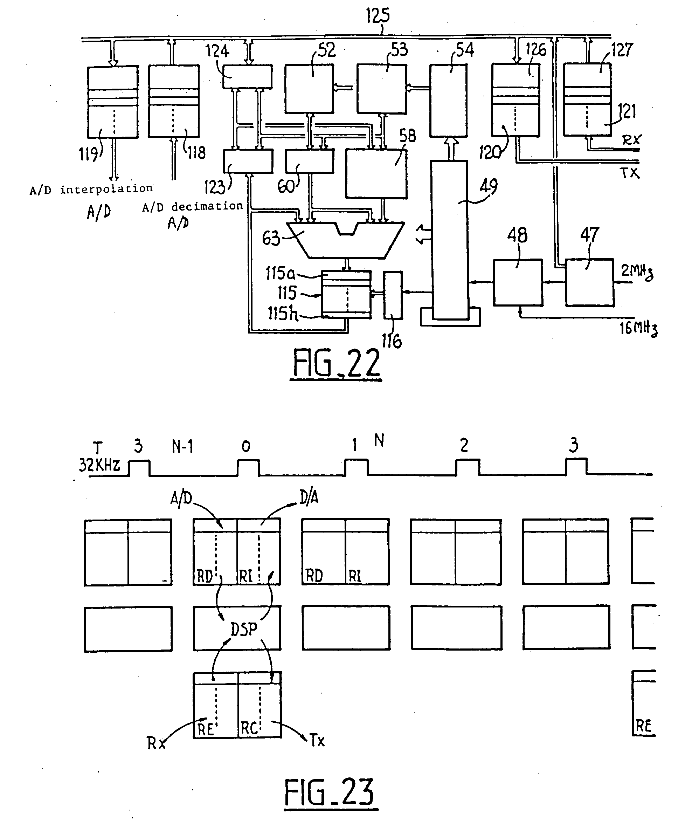

A digital signal-processing device used for the simultaneous calculation of the values of the eight channel filters is shown in Figure 22.

It has similar central processing unit CPU to that of Figure 6.

The components of this CPU which are identical to those of the CPU of Figure 6 are designated by the same reference numbers.

In contrast to the circuit of Figure 6, the CPU of the circuit of Figure 22 has at the output of ALU (63) a stack of accumulators 0-7 (115-115h) controlled by an 8 divider (116) from CROM 49 as described in reference to Figure 19.

The output of accumulator stack (115a-115h) is directly connected to the first input of ALU (63) and by two multiplexors (123, 124) to bus (125) that links with register stacks RI and RD (119, 118) and with register stacks RC and RE (120, 121).

Signal compressor circuit (126) is placed between bus (125) and register stack (120), whereas signal expander circuit (127) is placed between bus (125) and register stack RE (121).

Register stacks (118, 119) are respectively connected to decimation and interpolation circuits (113, 111) (Figure 17), whereas register stacks (120, 121) are respectively connected to output TX and to input RX.

Moreover, the buses linking multiplexors (124) and (123) are connected to multiplier (58), to data memory (52), to coefficient memory (53) and via multiplexor (60) to the inputs of ALU (63).

The digital signal-processing device performs the calculations of the filters for eight channels, exchanges the data between the exchange and the line via buffer registers RC and RE (120, 121), on the side of the exchange and buffer registers RI, RD (119, 118) on the line side.

On the central side, the exchanges take place at the raster rate at time To.

On the line side, the exchanges take place at 32 kHz, i.e., four time per raster.

This is shown in Figure 23, at instants To, the eight samples which are to be processed in raster N are loaded into register stack RE (121). The eight samples which were processed during raster N - 1, then loaded into register stack RC (12) are ready to be restored to the exchange on line TX.

At instants T0, T1, T2, and T3, the eight exchanges coming from the line which were converted into digital values, then decimated by the analog-digital converter (112) and decimation filter (113) (Figure 17), are loaded into register stack RD (118). These samples are processed in a 32-kHz period then restored at the end of the period in register stack RI (119) to be filtered by interpolation filter (111), then converted into analog by digital-analog converter (110).

The mechanism for accessing the register stacks by the outside channels is not described here.

In the following description, we will examine how the digital signal-processing device accesses these register stacks to acquire the samples, process them, and restore them.

Filtering sequences T0, T1, T2 and T3 in which registers RD and RI (118, 119) are accessed each time, time interval T0 in which register RE (121) is accessed, and time interval T3 for accessing stack RC (12) are generated by sequencer (47) which transmits a calculation request to synchronizer (48).

Synchronizer (48) generates an input point corresponding to the first microcode of the calculation algorithm, and digital signal-processing device DSP performs the calculation under the control of CROM memory (49).

When the corresponding calculation is completed, synchronizer (48) is repositioned in the wait status.

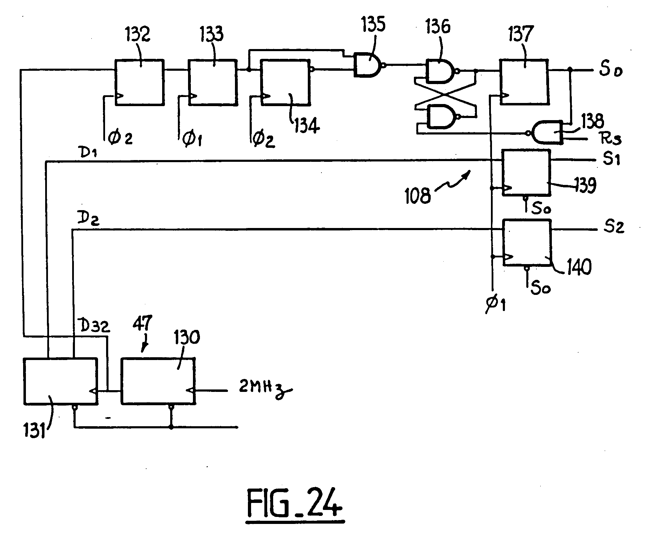

To implement the technique of simultaneously calculating the filters belonging to several channels, sequencer (47) and synchronizer (48) are constructed as described in reference to Figure 24.

Sequencer (47) comprises 64 divider (130) to obtain calculation requests D32 at 32 kHz.

Connected to the output of divider (130), 4 divider (131) is used for generating signals D1 and D2 which define the type of calculation to be performed.

The two dividers or counters are initialized by the raster beginning at 8 kHz.

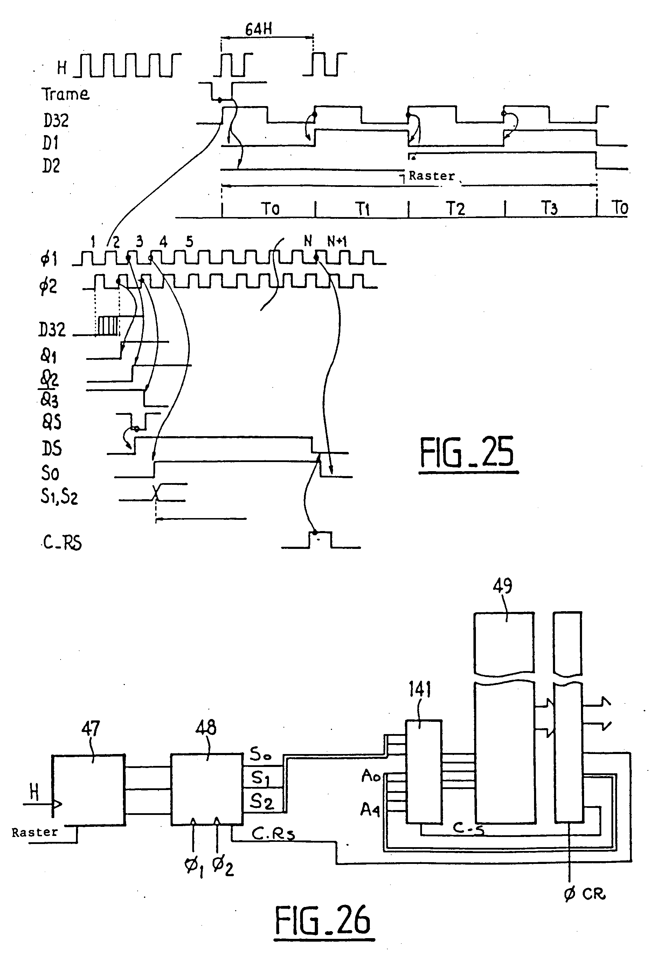

The operation of the circuit of Figure 24 is illustrated by the diagram of Figure 25.

Synchronizer (48) receives calculation request signal D32 and the resynchronizer on high-speed clock signals 01 02 in flip-flops (132-134).

The resynchronized signals are applied via NAND gate (135) to an input of flip-flop (137) generating signal (50).

The latter is applied to the other input of flip-flop (136) via NO-AND gate (138) which also receives end of calculation RS signal.

Signals S1 and S2 result from the processing of signals D1 and D2 produced by 4 divider (131) by flip-flops (139) and (140) which also receive clock signal 01 and therefore resynchronize signals D1 and D2 on this clock signal.

Synchronizer (48) generates signals S0, S1 and S2 during the entire calculation until signal C.RS clears flip-flop RS (136) then signal SO.

Depending on the position of signal D32 relative to the front of clock signal 02, the resynchronization time may vary between 1.5 and 2.5 rapid clock periods.

Signal D32 is recorded in circuit Q1 (132) by clock signal 02 with an error margin which depends on the rate of D32 relative to its rise time.

The output of flip-flop Q1 (132) is recorded in circuit Q2 (133) by clock signal 01 which is in quadrature with signal 02.

The error margin in flip-flop Q2 (133) becomes negligible due to the high performance of current high-speed technologies. It is of the order of $10^{-10}$.

As a result synchronous signal D32 of the clock at 2 MHz generates each time synchronous signal S0 of signal 01.

Signal S0 resets flip-flops S1 and S2 (139, 140) according to the following table.

| | | to | | | to+1,5 à 2,5 01 | | |
|---|---|---|---|---|---|---|---|
| D32 | 01 | 02 | CRS | S0 | S1 | S2 | |
| 0 | a | b | 0 | 0 | 0 | 0 | |
| 1 | a | b | 0 | 1 | a | b | |
| x | x | x | 1 | 0 | 0 | 0 | |

Signals S0, S1, and S2 transmitted to CROM memory (49) select one of the four types of calculations T0, T1, T2 or T3, depending on the value of "ab."

In Figure 26, we have shown the organization of the part of the circuit of Figure 22 adapted to control CROM memory (49).

We see in this figure that CROM (49) is connected to synchronizer (48) by the multiplexor. The address of CROM (49) comes from a multiplexor. The address of CROM (49) comes from this multiplexor which receives address signals A0 to A4 coming from the corresponding output of CROM (49) and signals (S0 to S2) coming from synchronizer (48).

Another signal C - S coming from CROM (49) selects:
- an unconditional jump if C - S = 1
- a conditional jump if C - S = 0

1 - Initial WAIT condition

| 0 | 0 | 0 | 0 | 0 | 0 | 0 | |
|---|---|---|---|---|---|---|---|
| $A_4$ | $A_3$ | $S_0$ | $S_1$ | $S_2$ | C-S | C-RS | Microcodes DSP |

The word CROM contains two fields, namely that which is reserved for executing the algorithm and that which is reserved for DSP which will be described below.

The WAIT microcode is located at address 00 of CROM 49.
It contains:
- $A_4 A_3 A_2 A_1 A_0$ = 00000
- C - S = 0
- C - S = 0
- C - RS = 0

Since C - S = 0, bits $A_2 A_1 A_0$ are respectively replaced by $S_0$, $S_1$, and $S_2$ coming from synchronizer (48).

As long as signal D32 = 0, SO = 0, which leads to $S_1 S_2$ = 0.

For each clock signal O, the word of CROM (49) read at address 00 again selects CROM address 00.

The algorithm is in the wait position at address WAIT 00.

The status change of signal D32 causes a switch from S0 to 1 after 1.5 to 2.5 periods of 01.

18

S0 = 1 enables signals $S_1$ and $S_2$ which select the type of calculation to be performed according to the following table.

| A4 | A3 | S0 | S1 | S2 | Ad $\mu$Code | 1 Nom $\mu$Code | Type calcul 2 |
|----|----|----|----|----|----|----|----|
| 0 | 0 | 1 | 0 | 0 | 04 | LP1 | T0 |
| 0 | 0 | 1 | 0 | 1 | 05 | GR1 | T2 |
| 0 | 0 | 1 | 1 | 0 | 06 | ZI1 | T1 |
| 0 | 0 | 1 | 1 | 1 | 07 | ZI1 | T3 |
| Key: 1-Name; 2-Calculation. | | | | | | | |

## 2 - Sequence of the algorithm

For all microcodes according to the algorithm of Figure 21, except for Z15 which functions like the WAIT microcode for selecting branches BD1, BP1, and NOP, each microcode selects the address of the next microcode to be executed by an unconditional jump (C - S = 1).

## 3 - Return to the WAIT Code

Microcodes NOP, BP4, and GX2 end the execution of a calculation by an unconditional jump to WAIT address 00. In all of these microcodes, bit C-RS which is at 1 clears synchronizer (48) and positions S0.S1 and S2 at zero to return to wait position on the wait code until the next calculation request.

We have just described how sequencer (47) and synchronizer (48) select the first microcode of the algorithm to be executed, depending on the values of S1 and S2. The algorithm is executed by CROM memory (49) itself with its jump conditions defined in its address field.

We will now examine how the calculations are carried out to perform the filtering function.

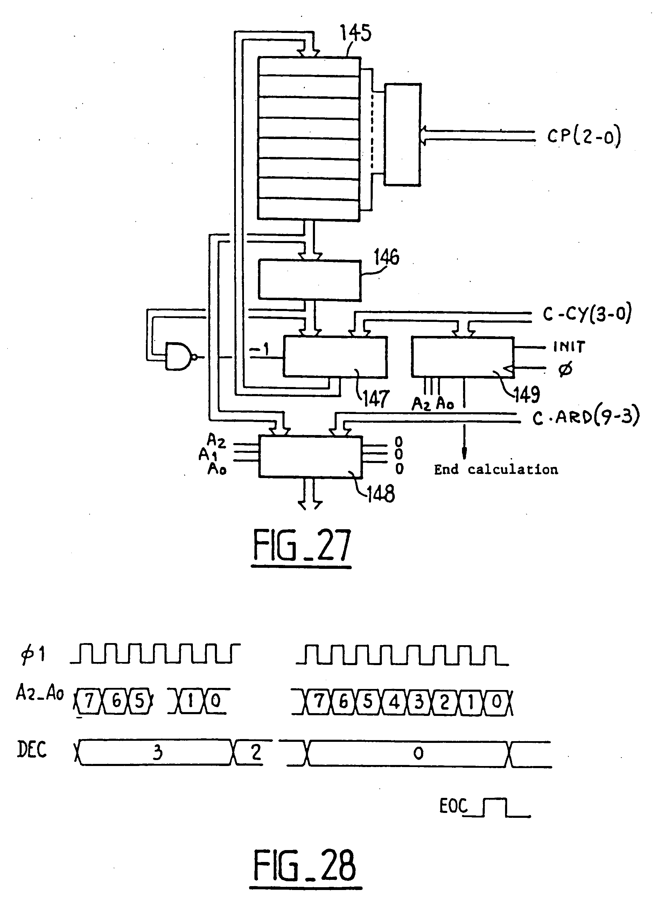

Address processor (54) of the device of Figure 22 has as shown in Figure 27 a stack of eight pointers (145) each of which are used to calculate a different filter. Pointer stack (145) is connected by subtractor (146) which decrements the pointer selected for each cycle, for multiplexor (147) controlled by the zero status of the output of substractor (146) and which selects either the output of the subtractor, or bits C-CY3 to C-CYO when status -1 is detected at the output of subtractor (146). It also has adder (148) which adds up the value of the pointer under consideration and bits A2, A1, and A0 with seven bits coming from CROm memory (49), C-ARD9 to 3 and downcounter (149) which controls the duration of the calculation sequence of a filter with four coefficients.

Downcounter (149) is positioned at value 4 at the beginning of the cycle.

The address processor shown in Figure 27 operates as follows.

It makes it possible to advance address ARD 9-0 between two terminals set by the value of C-CY(3-0).

For example, we assume the case of a filter with four coefficients.

For each channel, four multiplications and accumulations must be executed.

```
                              C-ARD     Pointeur  A₂A₁A₀    Operation
    >000 _____  0000000   0000      0  0  0

        | xn            7 |
        |-----------------|
        | xn            6 |
        |- - - - - - - - -|
        |-------/---------|
    >001|-/- - - - - - - -|          0000      1  1  1    xn(o)xho(o)
        | xn            0 |          0001      0  0  0
        |- - - - - - - - -|
        | xn-1          7 |
        |- - - - - - - - -|
        | xn-1          6 |
        |- - - - - -/- - -|
    >010|-/- - - - - - - -|          0001      1  1  1
        | xn-1          0 |          0010      0  0  0
        |- - - - - - - - -|
        | xn-2          7 |
        |- - - - - - - - -|
        | xn-1          6 |
        |- - - - - - -/- -|
    >011|/- - - - - - - - -|          0010     1  1  1
        | xn-2          0 |          0011      0  0  0
        |- - - - - - - - -|
        | xn-3          7 |
        |=================|
        | xn-3          6 |
        |- - - - - -/- - -|
    >011| xn-3          0 |  0000000   0011     1  1  1   x(n-3)(o)xh(n-3)(o)
    C-ARD
```

It is assumed that the microcode selects pointer 0 with bits C-P(2-0) = 000 and that this pointer contains the value 0011.

The number of coefficients is determined by C-CY(3-0) = 011 to select four coefficients. C-CY(3-0) is loaded into downcounter (149) by signal INIT and $A_2 A_1 A_0$ are positioned at 1.

The starting address is 001F since to generate ARD (9-0) the base address C-ARD (9-3) is added with the 7 bits formed by $A_0 A_1 A_2$ and the contents of the corresponding counter of stack (145).

Sample x(n-3) corresponding to channel "0" is read in data memory (52) (Figure 22) whereas coefficient h(n - 3) is read in coefficient memory (53) at the address generated by an address processor connected to coefficient memory (53).

The sample and coefficient are transmitted to multiplier (58) to perform the first filtering operation.

At the next cycle, downcounter $A_2$-$A_0$ (149) (Figure 27) is decremented $A_2 A_1 A_0 = 110$.

The reading address is 00IE, data RAM memory (52) contains sample x(n - 3) for channel 1.

The sample and coefficient are transmitted to DSP to perform the calculation.

When $A_2 A_1 A_0 = 000$, the last sample xn - 3 is processed then downcounter (149) is decremented.

The point is decremented by subtractor (146) P = 0010. Since the pointer is different than zero, multiplexor (147) selects the output of subtractor and the new value is written in the pointer.

During the next seven cycles, samples xn - 2 of seven other channels are processed in the same way.

When the pointer is at zero, samples xn are processed.

20

The output of subtractor (146) is equal to 1111. 1It controls multiplexor (147) which then selects bits C-CY(3-0) which will be written in the pointer at the end of the reading of eighth sample xn when $A_2 A_1 A_0$ = 000.

During the same period, downcounter (149) was decremented and generates end of calculation EOC signal.

The pointer of stack (145) contains value 0011. The pointer therefore circulates between the value programmed by bits C-CY(3-0) and zero.

During the next operation, the eight new samples xn are written in data memory (52) at address 0011 defined by pointer (145) then the latter is decremented to value 0010.

Accordingly, with the next series of calculations, the first sample processed is former x(n - 2) which becomes x(n - 3) and most recent sample xn took the place of former xn - 3.

There is therefore a rotation of the address of the beginning of the calculation:

| 1st Calculation | 1st Write |
|---|---|
| 3 2 1 0 | 3 |
| 2 1 0 3 | 2 |
| 1 0 3 2 | 1 |

which makes it possible to keep each time the series of the four most recent samples without having to slide the samples by read/write series during the calculation cycles.

The microcode sequence is shown in Figure 28.

The sequencer of address processor (54) makes it possible to generate the microcode change by signal 0CR (Figure 26).

Downcounter (149) of the address processor generates end of calculation EOC signal when the downcounter is at zero and the eight channels were processed.

The EOC signal should make it possible to change the microcode at the output of CROM memory (49) at instants that can change with the type of operation that controls the microprobe.

When the execution of two consecutive microcodes does not require that the contents of the accumulator be saved in data RAM memory (52), the control bit of the sequencer of the address processor is at zero, the EOC signal generates at the beginning of the next cycle to 0CR signal which loads the microcode at the output of CROM and the INIT signal which loads the downcounter of the address processor and initializes the predowncounter A2-AD to value 7.

When eight accumulators are saved in data RAM memory (52) following calculation microcode MAC (multiplication accumulation), one must wait for the delay caused by the pipeline to pass before being able to access accumulators (115) (Figure 22) before saving them.

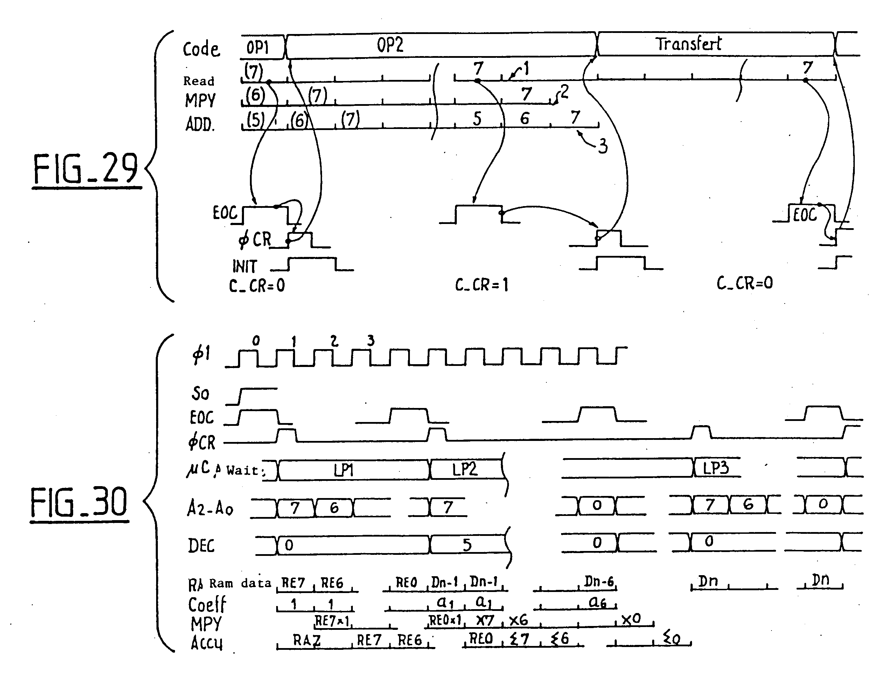

As shown in Figure 29, the C - CR = 1 signal in the microcode of operation OP2 delays 0CR by two clock cycles 01 before enabling the microcode to be changed.

Actually, in 1, the last read operation is performed.

Multiplication 2 is assigned to the next clock cycle, and accumulation 3 is performed two cycles after the reading.

Accumulator stack (115) is only available after the latter. The microcode may then change to transfer the accumulators into RAM 52, to the address specified by the microcode.

In referring again to the diagram of Figure 22 and to the diagram of Figure 30 as a function of time, we see that the beginning of sequence To consists of executing microcodes LP1-LP5 corresponding to the low-pass filtering. The eight new samples which were loaded into stack register RE (121) should be transferred into eight accumulators (115a-115h).

Sequencer (47) and synchronizer (48) generate signal So in the manner described in reference to Figure 24 and the addresses corresponding to the beginning of the sequence of microcode LP1.

The EOC signal generates 0CR which transfers the microcode selected at the output of memory CROM 49.

At instant 1, counter $A_2$-$A_0$ (149) of address processor (54) (Figure 27) is initialized at "7" and downcounter at "0". Register RE7 of stack (121) is transferred to bus (125) by the validation signal coming from CROM (49) and by the address selection signal coming from downcounter $A_2$-$A_0$ of address processor (54).

Multiplexor (124) transfers the contents of RE7 to the link bus with multiplier (58) under the control of CROM (49). The coefficient selected by address processor (54) is transferred to the linking bus of coefficient memory (53) with multiplier (58).

During the next cycle at instant 2, the contents of register RE7 of stack (121) is multiplied by the coefficient having value 1 by multiplier (58).

The result at the output of multiplier (58) is RE7. During this same cycle, counter $A_2$-$A_0$ which was decremented selects register RE6 of stack (121) in the same way.

During cycle 3, since the result found at the output of multiplier (58) is loaded into accumulator (115) at the address specified by $A_2$-$A_0$.

During this same period, sample RES is read in stack (121) and sample RE6 is multiplied by 1.

After eight cycles, counter $A_2$-$A_0$ is at the zero status. The eight samples were read in stack (121), end of calculation signal EOC is generated to change the microcode at the next cycle.

During the next two cycles, due to the pipeline architecture, samples RE1 and RE0 are transferred to accumulator (115) while the execution of microcode LP2 begins.

The execution of microcode LP2 is identical to the preceding one.

However, the data are read in data RAM (52) at the address specified by address processor (54) which is under the control of CROM (49).

Since there are six coefficients to be multiplied by six of the oldest samples, and the cycle is repeated for eight channels, downcounter (149) is loaded with value 5, it is decremented each time that $A_2$-$A_0$ is at the zero status, the end of the cycle takes place when $A_2$-$A_0$ and downcounter (149) are both at zero.

At this instant, the execution of LP2 is completed after 6 x 8 cycles, and the result should be transferred into data RAM memory (52) at address Dn for the eight samples.

After two wait cycles which make it possible to complete the accumulation of the results in accumulator (115), the transfer of eight samples DN may be carried out.

At the end of the transfer, the calculation sequence of the low-pass filter continues according to the same process.

Sequencer (47) selects one of the four calculation operations and synchronizer (48) generates the input point of CROM (49) by resyncrhonizing to a high-speed calculation clock.

When a microcode is selected, counter $A_2$-$A_0$ of address processor (54) shares all elements of the circuit so perform eight times the calculation or the operation with a single microcode.

The downcounter makes it possible to repeat this operation N times by changing each time a group of eight data and coefficients.

During a filter calculation at N coefficients, there are 8 x N cycles and only one microcode is used.

In the example just described, the invention is considered to apply to a digital signal-processing device associated with eight subscriber channels.

We naturally see that the application of the invention may be applied to the processing of a larger number of channels by a single digital processing device, provided that the time required to process these channels is compatible with the duration of the sampling raster.

## Claims

1. Device for processing telephonic signals for putting into communication a plurality of subscribers by means of a telephone exchange having circuits on cards of subscribers, comprising digital signal processing devices adapted to produce filtering functions for the purpose of the connection of subscribers to one another, and associated with said telephone exchange, at least two digital signal processing devices (15,16) common to a plurality of lines of subscribers (10a-10n, 11a-11n), each connected, on the one hand, to the telephone exchange (17), and, on the other hand, to a group of lines of subscribers and adapted to process the signals coming from said corresponding groups of lines of subscribers in shared time so as to effect the calculations of filtering functions associated with the various subscribers in accordance with frequencies allocated to the calculations of stages of filters adapted to constitute said functions of filtering and chronology of reception of said signals of subscribers, characterized in that each digital signal procesing device common to a plurality of lines of subscribers comprises a compressor-expander circuit (46) shared by said plurality of groups of lines and which is adapted to ensure the connection of the digital signal processing device to the telephone exchange, a sequencer circuit (47) controlled by clock signals generated by the telephone exchange and by control signals which define the position of samples of signals of the various lines in a predetermined period of time and adapted to generate orders to calculate of the various filters for each of the lines of subscribers, a circuit (48) for synchronizing the orders to calculate coming from the sequencer circuit, said synchronizer circuit being adapted to synchronize the orders to calculate relative to signals of a local clock and to generate input points of a CROM memory (49) at the end of a calculation in process so as to determine the address of a first microcode of a sequence of microcodes contained in said CROM memory and corresponding to a following calculation to be effected, a central processing unit CPU (51) controlled by the microcode bits of the CROM memory (49) so as to effect various calculating operations as a function of the configuration of the microcode bits, said central processing unit being moreover connected to a memory (52) of input data containing the samples on which the calculations must be carried out for each filter and to a memory (53) of coefficients adapted to be allocated to the input data for the carrying out of said calculations of the filters relating to said lines of subscribers and an address processor (54) connected, on the one hand, to the CROM memory (49) and, on the other hand, to said data memory (52) and to said coefficient memory (53), said address processor (34) being adapted to the management of the addresses of the data and of the coefficients and to select the addresses at which the data are located and to present said data to the central processing unit (51) in the required order for effecting the corresponding filter calculation.

2. Processing device according to claim 1 , characterized in that said data memory (52) is a RAM memory containing a number N of samples necessary for the calculation of a corresponding number of stages of each filter and said coefficient memory (53) is a RAM/ROM memory which contains the coefficients corresponding to the calculation of N stages of each filter.

3. Processing device according to claim 1 or 2 , characterized in that the central processing unit CPU (51) has an architecture of the pipeline type and comprises a part (51a) for reading data contained in said data memory (52) and the coefficients contained in said coefficient memory (53), a part (51b) for multiplying said data by the corresponding coefficients contained in said coefficient memory (53) and a part (51c) for summing the result of the multiplication with the preceding results.

4. Processing device according to claim 3, characterized in that the reading part (51a) of the data and coefficients of the central processing unit comprises a data bus (55) connecting said data memory (52) to a register (57) for transferring said data from the data memory to the multiplying part (51b) of the central processing unit under the control of clock signals(70), a bus of coefficients (56) connecting said coefficient memory (53) to a register (59) for transferring said coefficients to the multiplication part (51b) under the control of said clock signals(70) and means (60, 61) for the direct connection of the data bus and coefficient bus (55, 56) with the summing part (51c) of said central processing unit.

5. Processing device according to claim 3 or 4, characterized in that the part (51b) for multiplying said data by the coefficients comprises a multiplier (58) connected to said register (57) for transferring data to said register (59) for transferring coefficients and to a register (64) controlled by said clock signals (70) and adapted to transfer the products produced by the multiplier (58) to a first input or said summing part (51c) of the central processing unit.

6. Processing device according to any one of the claims 3 to 5, characterized in that said summing part (51c) of the central processing unit comprises an arithmetic and logic unit (63) controlled by sequences of microcodes generated by said CROM memory (49) and comprising a first input connected to said register (64) for transferring the products produced by said multiplier (58) and a second input connected to at least one accumulator (67) of the results of the preceding calculation, said arithmetic and logic unit being adapted to effect the sum of a product effected by said multiplier with the preceding results stored in the accumulator (67), said accumulator being controlled by said clock signals(70) and the output thereof being connected to said data memory (52) and to said coefficient memory (53) for storing in said memories the results of calculations of filters effected by said central processing unit.

7. Processing device according to any one of the claims 1 to 6, characterized in that said address processor (54) comprises, associated with each of said data and coefficient memories (52, 53), a stack of index registers (76) selected by address signals (75) coming from the CROM memory (49), a subtractor (81) connected to the output of said stack of index registers (76), a first multiplexor (82) connected to the output of said subtractor (81) and to an output of the CROM memory (49) delivering signals corresponding to the number of calculation cycles to be effected corresponding to the number of stages of a filter to be calculated, the output of said first multiplexor (82) being connected to said stack of index registers (76), an adder (85) connected by a bus (84) to the output of said stack of index registers (76) and to an output of said CROM memory (49) delivering a basic address signal, said adder associated with the data memory (52) being adapted to deliver data address signals which must be subjected to the calculating operations of a filter while said adder associated with the coefficient memory (53) is adapted to deliver coefficient address signals whereby the calculation of said filter must be effected, and a subtractor (86) connected to said output (77) of the number of cycles of the CROM memory (49) and adapted to transmit to the central processing unit (51) an end-of-calculation signal (EOC) at the end of the calculation of said filter.

8. Processing device according to claim 7, characterized in that the address processor further comprises a logic circuit (83) for detecting the zero value at the output of the stack of index registers (76) which controls the reloading in said index register of the value of the number of calculation cycles at the end of the calculation of a filter, the index register (76) being then ready to recommence a calculation with the same number of cycles as the preceding calculation.

9. Processing device according to any one of the claims 1 to 8, characterized in that said CROM memory (49) comprises a microcode memory unit (90), a decoding unit (91) for selecting one of the microcodes, a selection logic (92) interposed between said decoding unit (91) and said synchronizer (48), said CROM memory comprising a data base address output connected to the adder (85) of the address processor (54) associated with the data memory (52), a coefficient base address output connected to the adder of the address processor (54) associated with the coefficient memory (53), a number of calculating cycles output connected to the multiplexor (82) and to the subtractor (86) delivering the end-of-calculation signal (79) of said address processor and an output of the central processing unit control (51).

10. Processing device according to any one of the claims 1 to 9, characterized in that said sequencer (47) comprises for each of the samples (IT4-ITI) corresponding to a subscriber line, a counter (100) receiving the corresponding sample signal (IT4-IT1) and a decoder (101) for decompositions of each order into its different filtering frequency elements.

11. Processing device according to any one of the claims 1 to 10, characterized in that said synchronizer (48) is adapted to record and manage the priorities of the calculating orders it receives from the sequencer (47) and to put into a standby condition the calculations of lower priority and comprises for each calculation order at a given frequency a divider (102a-102d, 103a-103d, 104a-104d) dividing by a number corresponding to the number of calculations at said frequency permitting the management of the input points of the CROM memory (48) corresponding to the calculations managed by said divider and a decoder,(105a-105d, 106a-106d, 107a-107d) associated with each of the dividers, each divider comprising an output for the inhibition of the operation of the channels of said synchronizer adapted to control the calculations of lower priority than those controlled by the channel in which the considered divider is located.

12. Processing device according to any one of the claims 1 to 6, characterized in that is comprises a stack of accumulators (115a-115h) the number of which is equal to the number of channels to be processed, said accumulators being adapted to contain respectively the results of the filter calculations effected simultaneously for all the telephone lines in respect of which an order to put them into communication has been effected in a given interval of time IT and being controlled by a divider (116) dividing by a number equal to the number of channels to be processed by the CROM memory (49).

13. Processing device according to claim 12 , characterized in that said stack of accumulators (115a-115h) is directly connected to a first input of the arithmetic and logic unit ALU (63) through second and third multiplexors (123, 124) to a bus (125) of connection, on the one hand with stacks of registers RI and RD (119, 118) connected to the telephone exchange and, on the other hand, with stacks of registers RC and RE (120, 121) connected to the corresponding channels of subscribers, said stacks of registers comprising as many registers as there are channels of subscribers in which the samples corresponding respectively to said channels of subscribers are read or written at the rhythm of the filtering calculations effected by the central processing unit (51).

14. Processing device according to claim 12 or 13 , characterized in that there are respectively interposed between the bus (125) of connection of said stack of accumulators (115a-115h) and the stacks of registers RC and RE (120, 120), a signal compressor (126) and a signal expander (127).

24

**15.** Processing device according to any one of the claims 12 to 14, characterized in that said multiplexors (124, 123) of connection of said stack of accumulators (115a-115h) to the bus (125) of connection with said stacks of registers (118, 119, 120, 121) are further connected to the multiplexor (58), to the data memory (52), to the coefficient memory (53) and, through a multiplexor (60), to the inputs of the arithmetic and logic unit ALU (63).

**16.** Processing device according to any one of the claims 12 to 15, characterized in that said sequencer (47) comprises a first divider (130) of the clock frequency adapted to deliver signals (D32) ordering the calculation at a frequency equal to the frequency of calculation of filtering functions which is the highest and connected to the output of said first divider (130), a second divider (131) adapted to generate signals (D11, D12) which define the type of calculation to be effected, said first and second dividers being initialized by a signal of the start of the frame of time intervals (IT) containing said subscriber signals to be processed.

**17.** Processing device according to claim 16, characterized in that said synchronizer (48) comprises means (132-134) for re-synchronizing the calculation order signal (D32) with rapid clock signals (01, 02) and means (137, 139, 140) for generating from said re-synchronized calculation order signal (D32) and said signals (D1, D2) defining the type of calculation to be effected, signals (S0, S1, S2) of selection in said CROM memory (49) of the types of calculations (T0, T1, T2, T3) contained in the CROM memory.

**18.** Processing device according to claim 16 or 17, characterized in that the CROM memory (49) is connected to the synchronizer (48) through a fourth multiplexor (141) which receives from said CROM memory address signals (A0-A4) and a jump selecting signal (C-S), the value of which determines a standby condition or a condition of the carrying out of a calculation algorithm.

**19.** Processing device according to any one of the claims 12 to 18, characterized in that said address processor (54) comprises a stack of pointers (145) the number of which is equal to the number of channels to be processed and which are each employed for the calculation of a different filter, said stack of pointers being connected through a subtractor (146) adapted to decrement the pointer selected at each cycle, to a fifth multiplexor (147) controlled by the zero state of the output of the subtractor (146), an adder (148) connected to said stack of pointers (145) and to a downcounter (149) which permits a control of the duration of the calculation sequence of a filter having a given number of coefficients.

**Patentansprüche**

**1.** Einrichtung zur Verarbeitung von Telephonsignalen, um zwischen mehreren Teilnehmern mittels einer Telefonvermittlungsstelle, die Schaltungen auf Teilnehmerkarten besitzt, eine Kommunikation herzustellen, mit digitalen Signalverarbeitungseinrichtungen, die so beschaffen sind, daß sie für die Verbindung von Teilnehmern miteinander Filterungsfunktionen erzeugen, und wenigstens zwei digitalen Signalverarbeitungseinrichtungen (15, 16), die der Telefonvermittlungsstelle zugeordnet sind, mehreren Teilnehmeranschlußleitungen (10a - 10n, 11a - 11n) gemeinsam sind und jeweils einerseits mit der Telefonvermittlungsstelle (17) und andererseits mit einer Gruppe von Teilnehmeranschlußleitungen verbunden sind und so beschaffen sind, daß sie die von den entsprechenden Gruppen von Teilnehmeranschlußleitungen zeitlich verzahnt ankommenden Signale verarbeiten, um die Berechnungen der den verschiedenen Teilnehmern zugeordneten Filterungsfünktionen gemäß den den Berechnungen der Filterstufen zugewiesenen Frequenzen auszuführen, wobei die Filterstufen die Filterungsfunktionen und die zeitliche Reihenfolge des Empfangs der Signale der Teilnehmer schaffen können, dadurch gekennzeichnet, daß jede digitale Signalverarbeitungseinrichtung, die mehreren Teilnehmeranschlußleitungen gemeinsam ist, versehen ist mit einer Kompressions-Expansions-Schaltung (46), die von den mehreren Gruppen von Leitungen gemeinsam genutzt wird und die so beschaffen ist, daß sie die Verbindung der digitalen Signalverarbeitungseinrichtung mit der Telefonvermittlungsstelle gewährleistet, einer Ablaufsteuerschaltung (47), die durch von der Telefonvermittlungsstelle erzeugte Taktsignale sowie durch Steuersignale gesteuert wird, die die Position von Abtastwerten von Signalen der verschiedenen Leitungen in einer vorgegebenen Zeitperiode definieren, und die so beschaffen ist, daß sie Reihenfolgen für die Berechnung der veschiedenen Filter für jede der Teilnehmeranschlußleitungen erzeugt, einer Schaltung (48) zur Synchronisation der Berechnungsreihenfolgen, die von der Ablaufsteuerschaltung kommen, wobei die Synchronisationsschaltung so beschaffen ist, daß sie die Berechnungsreihenfolgen mit den Signalen

25

eines lokalen Takts synchronisiert und Eingangspunkte eines CROM-Speichers (49) am Ende einer momentan ausgeführten Berechnung erzeugt, um die Adresse eines ersten Mikrocodes einer Folge von Mikrocodes bestimmen, die in dem CROM-Speicher enthalten sind und die einer anschließend auszuführenden Berechnung entsprechen, einer Zentraleinheit CPU (51), die von den Mikrocode-Bits des CROM-Speichers (49) gesteuert wird, um die verschiedenen Rechenoperationen als Funktion der Konfiguration der Mikrocode-Bits auszuführen, wobei die Zentraleinheit darüber hinaus mit einem Speicher (52) von Eingangsdaten, die die Abtastwerte enthalten, in bezug auf die die Berechnungen für jedes Filter ausgeführt werden müssen, sowie mit einem Speicher (53) von Koeffizienten verbunden ist, welche so beschaffen sind, daß sie den Eingangsdaten zugeordnet werden können, um die Berechnungen der mit den Teilnehmeranschlußleitungen in Beziehung stehenden Filter auszuführen, und einem Adressenprozessor (54), der einerseits mit dem CROM-Speicher (49) und andererseits mit dem Datenspeicher (52) und dem Koeffizientenspeicher (53) verbunden ist, wobei der Adressenprozessor (34) so beschaffen ist, daß er die Verwaltung der Adressen der Daten und der Koeffizienten ausführt und die Adressen wählt, an denen sich die Daten befinden, und die Daten der Zentraleinheit (51) in der geforderten Reihenfolge zur Verfügung stellt, in der die entsprechende Filterberechnung ausgeführt wird.

2. Verarbeitungseinrichtung gemäß Anspruch 1, dadurch gekennzeichnet, daß der Datenspeicher (52) ein RAM-Speicher ist, der eine Anzahl N von Abtastwerten enthält, die zur Berechnung einer entsprechenden Anzahl von Stufen eines jeden Filters notwendig sind, und der Koeffizientenspeicher (53) ein RAM/ROM-Speicher ist, der die Koeffizienten enthält, die der Berechnung der N Stufen eines jeden Filters entsprechen.

3. Verarbeitungseinrichtung gemäß Anspruch 1 oder 2, dadurch gekennzeichnet, daß die Zentraleinheit CPU (51) eine Architektur vom Piplinetyp besitzt und versehen ist mit einem Teil (51a) zum Lesen der im Datenspeicher (52) enthaltenen Daten und der im Koeffizientenspeicher (53) enthaltenen Koeffizienten, einem Teil (51b) zum Multiplizieren der Daten mit den entsprechenden im Koeffizientenspeicher (53) enthaltenen Koeffizienten und einem Teil (51c) zum Summieren des Multiplikationsergebnisses mit den vorhergehenden Ergebnissen.

4. Verarbeitungeinrichtung gemäß Anspruch 3, dadurch gekennzeichnet, daß der Leseteil (51a) der Daten und Koeffizienten der Zentraleinheit versehen ist mit einem Datenbus (55), der den Datenspeicher (52) mit einem Register (57) verbindet, das der Übertragung der Daten vom Datenspeicher zum Multiplikationsteil (51b) der Zentraleinheit unter der Steuerung von Taktsignalen (70) dient, einem Koeffizientenbus (56), der den Koeffizientenspeicher (53) mit einem Register (59) verbindet, das der Übertragung der Koeffizienten zum Multiplikationsteil (51b) unter der Steuerung der Taktsignale (70) dient, und Einrichtungen (60, 61) für die direkte Verbindung des Datenbusses und des Koeffizientenbusses (55, 56) mit dem Summationsteil (51c) der Zentraleinheit.

5. Verarbeitungseinrichtung gemäß Anspruch 3 oder 4, dadurch gekennzeichnet, daß der Teil (51b) zum Multiplizieren der Daten mit den Koeffizienten einen Multiplizierer (58) aufweist, der mit dem Datenübertragungsregister (57), mit dem Koeffizientenübertragungsregister (59) und mit einem durch die Taktsignale (70) gesteuerten Register (64) verbunden ist, und so beschaffen ist, daß er die vom Multiplizierer (58) erzeugten Produkte an einen ersten Eingang des Summationsteils (51c) der Zentraleinheit überträgt.

6. Verarbeitungseinrichtung gemäß einem der Ansprüche 3 bis 5, dadurch gekennzeichnet, daß der Summationsteil (51c) der Zentraleinheit eine Arithmetik- und logikeinheit (53) aufweist, die durch Folgen von Mikrocodes gesteuert wird, die vom CROM-Speicher (49) erzeugt werden, und einen ersten Eingang, der mit dem Register (64) zur Übertragung der vom Multiplizierer (58) erzeugten Produkte verbunden ist, sowie einen zweiten Eingang aufweist, der mit wenigstens einem Akkumulator (67) für die Ergebnisse der vorangehenden Berechnung verbunden ist, wobei die Arithmetik- und Logikeinheit so beschaffen ist, daß sie die Summe eines vom Multiplizierer ausgeführten Produkts mit den im Akkumulator (67) gespeicherten vorhergehenden Ergebnissen bildet, wobei der Akkumulator durch die Taktsignale (70) gesteuert wird und sein Ausgang mit dem Datenspeicher (52) und mit dem Koeffizientenspeicher (53) verbunden ist, um in den Speichern die Ergebnisse der von der Zentraleinheit ausgeführten Filterberechnungen zu speichern.

**7.** Verarbeitungseinrichtung gemäß einem der Ansprüche 1 bis 6, dadurch gekennzeichnet, daß der Adressenprozessor (54) für jeden der Daten- und Koeffizientenspeicher (52, 53) versehen ist mit einem Stapel von Indexregistern (76), die durch Adressensignale (75) gewählt werden, die vom CROM-Speicher (49) kommen, einem Subtrahierer (81), der mit dem Ausgang des Stapels von Indexregistern (76) verbunden ist, einem ersten Multiplexierer (82), der mit dem Ausgang des Subtrahierers (81) und mit einem Ausgang des CROM-Speichers (49) verbunden ist, der Signale ausgibt, die der Anzahl von auszuführenden Rechenzyklen entspricht, welche der Anzahl von Stufen eines zu berechnenden Filters entspricht, wobei der Ausgang des ersten Multiplexierers (32) mit dem Stapel von Indexregistern (76) verbunden ist, einem Addierer (85), der über einen Bus (84) mit dem Ausgang des Stapels von Indexregistern (76) sowie mit einem ein Basisadressensignal ausgebenden Ausgang des CROM-Speichers (49) verbunden ist, wobei der dem Datenspeicher (52) zugehörige Addierer so beschaffen ist, daß er Datenadressensignale ausgibt, die den Rechenoperationen für ein Filter unterworfen werden müssen, während der dem Koeffizientenspeicher (53) zugehörige Addierer so beschaffen ist, daß er Koeffizientenadressensignale ausgibt, mit denen die Berechnung des Filters ausgeführt werden muß, und einem Subtrahierer (86), der mit dem Ausgang (77) für die Zyklusanzahl des CROM-Speichers (49) verbunden und so beschaffen ist, daß er am Ende der Berechnung des Filters ein Berechnungsendesignal (EOC) an die Zentraleinheit (51) überträgt.

**8.** Verarbeitungseinrichtung gemäß Anspruch 7, dadurch gekennzeichnet, daß der Adressenprozessor ferner eine logikschaltung (83) zur Erfassung des Null-Wertes am Ausgang des Stapels von Indexregistern (76) aufweist, die das Neuladen des Wertes der Anzahl von Rechenzyklen in das Indexregister am Ende der Berechnung eines Filters steuert, wobei das Indexregister (76) dann bereit ist, erneut eine Berechnung mit derselben Anzahl von Zyklen wie in der vorhergehenden Berechnung zu beginnen.

**9.** Verarbeitungseinrichtung gemäß einem der Ansprüche 1 bis 8, dadurch gekennzeichnet, daß der CROM-Speicher (49) versehen ist mit einer Mikrocode-Speichereinheit (90), einer Decodiereinheit (91) zur Auswahl eines der Mikrocodes, einer Auswahllogik (92), die zwischen die Decodiereinheit (91) und den Synchronisierer (48) geschaltet ist, einem Daten-Basisadressenausgang, der mit dem dem Datenspeicher (52) zugehörigen Addierer (85) des Adressenprozessors (54) verbunden ist, einem Koeffizienten-Basisadressenausgang, der mit dem dem Koeffizientenspeicher (53) zugehörigen Addierer des Adressenprozessors (54) verbunden ist, einem Rechenzyklusanzahlausgang, der mit dem Multiplexierer (82) und mit dem Subtrahierer (86), der das Berechnungssendesignal (71) des Adressenprozessors ausgibt, verbunden ist, und einem Ausgang der Zentraleinheitsteuerung (51).

**10.** Verarbeitungseinrichtung gemäß einem der Ansprüche 1 bis 9, dadurch gekennzeichnet, daß die Ablaufsteuerung (47) für jeden der einer Teilnehmeranschlußleitung entsprechenden Abtastwerte (IT4-IT1) einen Zahler (100), der das entsprechende Abtastsignal (IT4-IT1) empfängt, sowie einen Decodierer (101) aufweist, der jede Reihenfolge in ihre verschiedenen Filterfrequenzelemente zerlegt.

**11.** Verarbeitungseinrichtung gemäß einem der Ansprüche 1 bis 10, dadurch gekennzeichnet, daß der Synchronisierer (58) so beschaffen ist, daß er die Prioritäten der Rechenreihenfolgen aufzeichnet und verwaltet, die er von der Ablaufsteuerung (47) empfängt, daß er die Berechnungen geringerer Priorität in einen Bereitschaftszustand versetzt und daß er für jede Berechnungereihenfolge bei einer gegebenen Frequenz einen Dividierer (102a-102d, 103a-103d, 104a-104d), der eine Division durch eine Zahl durchführt, die der Anzahl der Berechnungen bei der Frequenz entspricht, wodurch die Verwaltung der Eingangspunkte des CROM-Speichers (48), die den vom Dividierer verwalteten Berechnungen entsprechen, ermöglicht wird, sowie einen Decodierer (105a-105d, 106a-106d, 107a-107d) aufweist, der jedem der Dividierer zugeordnet ist, wobei jeder Dividierer einen Ausgang zum Sperren der Operation der Kanäle des Synchronisierers aufweist, der dazu geeignet ist, die Berechnungen zu steuern, deren Priorität niedriger als diejenigen ist, die durch den Kanal gesteuert werden, in dem sich der betrachtete Dividierer befindet.

**12.** Verarbeitungseinrichtung gemäß einem der Ansprüche 1 bis 6, dadurch gekennzeichnet, daß er einen Stapel von Akkumulatoren (115a, 115h) aufweist, deren Anzahl gleich der Anzahl von zu verarbeitenden Kanälen ist, wobei die Akkumulatoren so beschaffen sind, daß sie jeweils die Ergebnisse der Filterberechnungen enthalten, die in einem gegebenen Zeitintervall IT gleichzeitig für sämtliche Telefonleitungen ausgeführt worden sind, für die eine Reihenfolge erstellt worden ist, in der sie verbunden werden, und durch einen Dividierer (116) gesteuert werden, der eine Division durch eine Zahl ausführt, die gleich der Anzahl von Kanälen ist, die vom CROM-Speicher (49) verarbeitet werden.

13. Verarbeitungseinrichtung gemäß Anspruch 12, dadurch gekennzeichnet, daß der Stapel von Akkumulatoren (115a-115h) direkt mit einem ersten Eingang der Arithmetik- und Logikeinheit ALU (63) und über einen zweiten und einen dritten Multiplexierer (123, 124) mit einem Bus (125) verbunden ist, der einerseits der Verbindung mit den Stapeln von Registern RI und RD (119, 118), die mit der Telephonvermittlungsstelle verbunden sind, und andererseits mit den Stapeln der Register RC und RE (120, 121), die mit den entprechenden Teilnehmerkanälen verbunden sind, dient, wobei die Stapel von Registern soviele Register enthalten wie Teilnehmerkanäle vorhanden sind, aus denen bzw. in die im Rhythmus der von der Zentraleinheit (51) ausgeführten Filterberechnungen Abtastwerte, die den jeweiligen Teilnehmerkanälen entsprechen, gelesen bzw. geschrieben werden.

14. Verarbeitungseinrichtung gemäß Anspruch 12 oder 13, dadurch gekennzeichnet, daß zwischen den Bus (125) für die Verbindung des Stapels von Akkumulatoren (115a-115h) und die Stapel von Registern RC und RE (120, 120) ein Signalkompressor (126) und ein Signalexpandierer (127) geschaltet sind.

15. Verarbeitungseinrichtung gemäß einem der Ansprüche 12 bis 14, dadurch gekennzeichnet, daß die Multiplexierer (124, 123) für die Verbindung des Stapels von Akkumulatoren (115a-115h) mit dem Bus (125) für die Verbindung mit den Stapeln von Registern (118, 119, 120, 121) weiterhin mit dem Multiplexierer (58), mit dem Datenspeicher (52), mit dem Koeffizientenspeicher (53) und über einen Multiplexierer (60) mit den Eingängen der Arithmetik- und Logikeinheit ALU (63) verbunden sind.

16. Verarbeitungseinrichtung gemäß einem der Ansprüche 12 bis 15, dadurch gekennzeichnet, daß die Ablaufsteuerung (47) versehen ist mit einem ersten Dividierer (130) für die Taktfrequenz, der so beschaffen ist, daß er Signale (D32) ausgibt, die die Reihenfolge der Berechnung bei einer Frequenz erzeugen, die gleich der Frequenz derjenigen Berechnung von Filterfunktionen ist, die die höchste ist und mit dem Ausgang des ersten Dividierers (130) verbunden ist, und einem zweiten Dividierer (131), der so beschaffen ist, daß er Signale erzeugt (D11, D12), die den Typ der auszuführenden Berechnung definieren, wobei der erste und der zweite Dividierer durch ein Startsignal des Rahmens von die zu verarbeitenden Teilnehmersignale enthaltenden Zeitintervallen (IT) initialisiert werden.

17. Verarbeitungsseinrichtung gemäß Anspruch 16, dadurch gekennzeichnet, daß der Synchronisierer (48) versehen ist mit Einrichtungen (132-134) zur Resynchronisation des Berechnungsbefehlsignals (D32) mit schnellen Taktsignalen (01, 02) und Einrichtungen (137, 139, 140) zur Erzeugung von Signalen (S0, S1, S2) zur Auswahl der Typen von im CROM-Speicher (49) enthaltenen Berechnungen (T0, T1, T2, T3) im CROM-Speicher anhand des resynchronisierten Berechnungsreihenfolgensignals (D32) und der Signale (D1, D2), die den Typ der auszuführenden Berechnung definieren.

18. Verarbeitungseinrichtung gemäß Anspruch 16 oder 17, dadurch gekennzeichnet, daß der CROM-Speicher (49) mit dem Synchronisierer (48) über einen vierten Multiplexierer (141) verbunden ist, der vom CROM-Speicher Adressensignale (A0-A4) sowie ein Sprungwählsignal (C-S) empfängt, dessen Wert einen Bereitschaftszustand oder einen Zustand des Ausführens eines Rechenalgorithmus bestimmt.

19. Verarbeitungseinrichtung gemäß einem der Ansprüche 12 bis 18, dadurch gekennzeichnet, daß der Adressenprozessor (54) versehen ist mit einem Stapel von Zeigern (145), deren Anzahl gleich der Anzahl von zu verarbeitenden Kanälen ist und die jeweils für die Berechnung eines unterschiedlichen Filters verwendet werden, wobei der Stapel von Zeigern über einen Subtrahierer (146), der den gewählten Zeiger in jedem Zyklus schrittweise verringert, mit einem fünften Multiplexierer (147) verbunden ist, der durch den Null-Zustand des Ausgangs des Subtrahierers (146) gesteuert wird, und einem Addierer (148), der mit dem Stapel von Zeigern (145) sowie mit einem Abwärtszähler (149) verbunden ist, der eine Steuerung der Dauer der Rechenfolge eines Filters mit einer gegebenen Anzahl von Koeffizienten gestattet.

## Revendications

1. Dispositif de traitement de signaux téléphoniques pour la mise en communication de plusieurs abonnées à l'aide d'un central téléphonique à circuits sur cartes d'abonnés, comprenant des dispositifs de traitement de signaux numériques destinés à élaborer des fonctions de filtrage en vue de la connexion d'abonnés entre eux, et associés audit central téléphonique au moins deux dispositifs de traitement de signaux numériques (15,16) communs à plusieurs lignes d'abonnés (10a-10n, 11a-11n), connectés chacun d'une part au central téléphonique (17) et d'autre part à un groupe de lignes d'abonnés et destinés à traiter les signaux provenant desdits groupes de lignes d'abonnés correspondants en temps partagé afin d'effectuer des calculs de fonctions de filtrage associées aux divers abonnés en fonction de fréquences affectées aux calculs d'étages de filtres destinés à constituer lesdites fonctions de filtrage et de la chronologie de réception desdits signaux d'abonnés, caractérisé en ce que chaque dispositif numérique de traitement de signaux commun à plusieurs lignes d'abonnés comprend un circuit compresseur-expanseur (46) partagé par lesdits plusieurs groupes de lignes et qui est destiné à assurer la connexion du dispositif numérique de traitement de signaux au central téléphonique, un circuit séquenceur (47) contrôlé par des signaux d'horloge générés par le central téléphonique et par des signaux de commande qui définissent la position des échantillons de signaux des différentes lignes dans une période de temps prédéterminée et destiné à générer des ordres de calcul des différents filtres pour chacune des lignes d'abonnés, un circuit synchroniseur (48) des ordres de calcul provenant du circuit séquenceur, ledit circuit synchroniseur étant destiné à synchroniser les ordres de calcul par rapport à des signaux d'une horloge locale et à générer des points d'entrée d'une mémoire CROM (49) à la fin d'un calcul en cours afin de déterminer l'adresse d'un premier microcode d'une séquence de microcodes contenue dans ladite mémoire CROM et correspondant à un calcul suivant à effectuer, une unité centrale de traitement CPU (51) contrôlée par les bits de microcode de la mémoire CROM (49) afin de réaliser différentes opérations de calcul en fonction de la configuration des bits de microcodes, ladite unité centrale de traitement étant en outre connectée à une mémoire (52) de données d'entrée contenant les échantillons sur lesquels les calculs doivent être faits pour chaque filtre et à une mémoire (53) de coefficients destinés à être affectés aux données d'entrée pour la réalisation desdits calculs des filtres relatifs auxdites lignes d'abonnés et un processeur d'adresses (54) relié d'une part à la mémoire CROM (49) et d'autre part, à ladite mémoire de données (52) et à ladite mémoire de coefficients (53), ledit processeur d'adresses (34) étant destiné à la gestion des adresses des données et des coefficients et à sélectionner les adresses auxquelles ont situées les données et à présenter ces données à l'unité centrale de traitement (51) dans l'ordre requis pour effectuer le calcul de filtre correspondant.

2. Dispositif de traitement suivant la revendication 1, caractérisé en ce que ladite mémoire de données (52) est une mémoire RAM contenant un nombre N d'échantillons nécessaires au calcul d'un nombre correspondant d'étages de chaque filtre et ladite mémoire de coefficients (53) est une mémoire RAM/ROM qui contient les coefficients correspondant au calcul de N étages de chaque filtre.

3. Dispositif de traitement suivant la revendication 1 ou 2, caractérisé en ce que l'unité centrale de traitement CPU (51) est d'une architecture de type pipeline et comporte une partie (51a) de lecture des données contenues dans ladite mémoire de données (52) et des coefficients contenus dans ladite mémoire de coefficients (53), une partie (51b) de multiplication desdites données par les coefficients correspondants contenus dans ladite mémoire de coefficients (53) et une partie (51c) de sommation du résultat de la multiplication avec les résultats précédents.

4. Dispositif de traitement suivant la revendication 3, caractérisé en ce que la partie (51a) de lecture de données et de coefficients de l'unité centrale de traitement comporte un bus de données (55) reliant ladite mémoire de données (52) à un registre (57) de transfert desdites données de la mémoire de données vers la partie (51b) de multiplication de l'unité centrale de traitement sous la commande de signaux d'horloge (70), un bus de coefficients (56) reliant ladite mémoire de coefficients (53) à un registre (59) de transfert desdits coefficients vers la partie (51b) de multiplication sous la commande desdits signaux d'horloge (70) et des moyens (60,61) de liaison directe du bus de données et de coefficients (55,56) avec la partie (51c) de sommation de ladite unité centrale de traitement.

5. Dispositif de traitement suivant la revendication 3 ou 4, caractérisé en ce que la partie (51b) de multiplication desdites données par les coefficients comporte un multiplieur (58) connecté audit registre (57) de transfert de données audit registre (59) de transfert de coefficients et à un registre (64) commandé par lesdits signaux d'horloge (70) et destinés à transférer les produits effectués par le multiplieur (58) vers une première entrée de ladite partie (51c) de sommation de l'unité centrale de traitement.

6. Dispositif de traitement suivant l'une quelconque des revendications 3 à 5, caractérisé en ce que ladite partie (51c) de sommation de l'unité centrale de traitement comporte une unité arithmétique et logique (63) commandée par des séquences de microcodes engendrés par ladite mémoire CROM (49) et comportant une première entrée reliée audit registre (64) de transfert des produits effectués par ledit multiplieur (58) et une deuxième entrée reliée à au moins un accumulateur (67) des résultats de calcul précédentes, ladite unité arithmétique et logique étant destinée à effectuer la somme d'un produit effectué par ledit multiplieur avec les résultats précédents stockés dans l'accumulateur (67), ledit accumulateur étant commandé par lesdits signaux d'horloge (70) et sa sortie étant en outre reliée à ladite mémoire de données (52) et à ladite mémoire de coefficients (53) en vue d'assurer le stockage dans lesdites mémoires des résultats de calculs de filtres effectués par ladite unité centrale de traitement.

7. Dispositif de traitement suivant l'une quelconque des revendications 1 à 6, caractérisé en ce que ledit processeur d'adresses (54) comporte associés à chacune desdites mémoires de données et de coefficients (52,53) une pile de registres d'index (76) sélectionnés par des signaux d'adresse (75) provenant de la mémoire CROM (49), un soustracteur (81) relié à la sortie de ladite pile de registres d'index (76), un multiplexeur (82) relié à la sortie du soustracteur (81) et à une sortie de la mémoire CROM (49) délivrant des signaux correspondant au nombre de cycles de calcul à effectuer correspondant au nombre d'étages d'un filtre à calculer, la sortie dudit multiplexeur (82) étant reliée à ladite pile de registres d'index (76), un additionneur (85) relié par un bus (84) à la sortie de ladite pile de registres d'index (76) et à une sortie de ladite mémoire CROM (49) délivrant un signal d'adresse de base, ledit additionneur associé à la mémoire de données (52) étant destiné à délivrer des signaux d'adresses de données devant être soumises aux opérations de calcul d'un filtre tandis que ledit additionneur associé à la mémoire de coefficients (53) est destiné à délivrer des signaux d'adresse de coefficients à l'aide desquels le calcul dudit filtre doit être effectué, ainsi qu'un soustracteur (86) relié à ladite sortie (77) de nombre de cycles de la mémoire CROM (49) et destiné à émettre vers l'unité centrale de traitement (51) un signal de fin de calcul (EOC) à la fin du calcul dudit filtre.

8. Dispositif de traitement suivant la revendication 7, caractérisé en ce que le processeur d'adresses comporte en outre un circuit logique (83) de détection de la valeur zéro à la sortie de la pile de registres d'index (76) qui commande le rechargement dans ledit registre d'index de la valeur du nombre de cycles de calcul à la fin du calcul d'un filtre, le registre d'index (76) étant alors prêt à recommencer un calcul avec le même nombre de cycles que le calcul précédent.

9. Dispositif de traitement suivant l'une quelconque des revendications 1 à 8, caractérisé en ce que ladite mémoire CROM (49) comporte un bloc (90) de mémoire de microcode, un bloc de décodage (91) permettant de sélectionner un des microcodes, une logique de sélection (92) intercalée entre ledit bloc de décodage (91) et ledit synchroniseur (48), ladite mémoire CROM comportant une sortie d'adresse de base de données connectée à l'additionneur (85) du processeur d'adresses (54), associé à la mémoire de données (52), une sortie d'adresse de base de coefficients connectée à l'additionneur du processeur d'adresse (54) associé à la mémoire de coefficient (53), une sortie de nombre de cycles de calcul reliée au multiplexeur (82) et au soustracteur (86) délivrant le signal de fin de calcul (79) dudit processeur d'adresse et une sortie de commande de l'unité centrale de traitement (51).

10. Dispositif de traitement suivant l'une quelconque des revendications 1 à 9, caractérisé en ce que ledit séquenceur (47) comporte pour chacun des échantillons (IT4-IT1) correspondant à une ligne d'abonné, un compteur (100) recevant le signal (IT4-IT1) d'échantillon correspondant et un décodeur (101) de décomposition de chaque demande en ses éléments de différentes fréquences de filtrage.

11. Dispositif de traitement suivant l'une quelconque des revendications 1 à 10, caractérisé en ce que ledit synchroniseur (48) est destiné à enregistrer et à gérer les priorités des demandes de calcul qu'il reçoit du séquenceur (47) et à mettre en attente les calculs moins prioritaires et comporte pour chaque demande de calcul à une fréquence déterminée un diviseur (102a-102d, 103a-103d, 104a-104d) par un nombre correspondant au nombre de calculs à ladite fréquence permettant de gérer les points d'entrée de la mémoire CROM (49) correspondant aux calculs gérés par ledit diviseur et un décodeur (105a-105d, 106a-106d, 107a-107d) associé à chacun des diviseurs, chaque diviseur comportant une sortie d'inhibition du fonctionnement des voies dudit synchroniseur destinée à commander des calculs moins prioritaires que ceux commandés par la voie dans laquelle se trouve le diviseur considéré.

**12.** Dispositif de traitement suivant l'une quelconque des revendications 1 à 6, caractérisé en ce qu'il comporte une pile d'accumulateurs (115a-115h) dont le nombre est égal au nombre de voies à traiter, lesdits accumulateurs étant destinés à contenir respectivement les résultats de calculs de filtres effectués simultanément pour toutes les lignes téléphoniques dont la mise en communication a été demandée dans un intervalle de temps IT déterminé et étant commandés par un diviseur (116) par un nombre égal au nombre de voies à traiter à partir de la mémoire CROM (49).

**13.** Dispositif de traitement suivant la revendication 12, caractérisé en ce que ladite pile d'accumulateurs (115a-115h) est reliée directement à une première entrée de l'unité arithmétique et logique ALU (63) et par l'intermédiaire de multiplexeurs (123,124) à un bus (125) de liaison d'une part avec des piles de registres RI et RD (119 et 118) reliés au central téléphonique et d'autre part avec des piles de registres RC et RE (120,121), reliés aux voies correspondantes d'abonnés, lesdites piles de registres comportant autant de registres que des voies d'abonnés dans lesquels les échantillons correspondant respectivement auxdites voies d'abonnés sont lus ou écrits au rythme des calculs de filtrage effectués par l'unité de centrale de traitement (51).

**14.** Dispositif de traitement suivant la revendication 12 ou 13, caractérisé en ce qu'entre le bus (125) de liaison de ladite pile d'accumulateur (115a-115h) et les piles de registres RC et RE (120 et 120) sont respectivement intercalés un compresseur de signaux (126) et un expanseur de signaux (127).

**15.** Dispositif de traitement suivant l'une quelconque des revendications 12 à 14, caractérisé en ce que lesdits multiplexeurs (124,123) de liaison de ladite pile d'accumulateurs (115a-115h) au bus (125) de liaison avec lesdites piles de registres (118,119,120,121) sont en outre reliés au multiplexeur (58), à la mémoire de données (52), à la mémoire de coefficients (53) et, par l'intermédiaire d'un multiplexeur (60) aux entrées de l'unité arithmétique et logique ALU (63).

**16.** Dispositif de traitement suivant l'une quelconque des revendications 12 à 15, caractérisé en ce que ledit séquenceur (47) comprend un premier diviseur (130) de la fréquence d'horloge destiné à délivrer des signaux (D32) de demande de calcul à une fréquence égale à la fréquence de calcul de fonctions de filtrage la plus élevée et connecté à la sortie dudit premier diviseur (130), un second diviseur (131) destiné à générer des signaux (D11, D12) qui définissent le type de calcul à effectuer, lesdits premier et second diviseurs étant initialisés par un signal de début de trame d'intervalles de temps (IT) contenant lesdits signaux d'abonnés à traiter.

**17.** Dispositif de traitement suivant la revendication 16, caractérisé en ce que ledit synchroniseur (48) comporte des moyens (132 à 134) de resynchronisation du signal (D32) de demande de calcul sur des signaux ($\phi$1,$\phi$2) d'horloge rapide et des moyens (137, 139, 140) pour générer à partir dudit signal de demande de calcul (D32) resynchronisé et desdits signaux (D1,D2) définissant le type de calcul à effectuer, des signaux (SO,S1,S2) de sélection dans ladite mémoire CROM (49) de types de calculs (TO,T1,T2,T3) contenus dans celle-ci.

**18.** Dispositif de traitement suivant la revendication 16 ou 17, caractérisé en ce que la mémoire CROM (49) est reliée au synchroniseur (48) par l'intermédiaire d'un multiplexeur (141) qui reçoit de ladite mémoire CROM des signaux d'adresse (AO-A4) ainsi qu'un signal (C-S) de sélection de saut dont la valeur détermine une condition d'attente ou une condition d'exécution d'un algorithme de calcul.

**19.** Dispositif de traitement suivant l'une quelconque des revendications 12 à 18, caractérisé en ce que ledit processeur d'adresses (54) comporte une pile de pointeurs (145) dont le nombre est égal au nombre de voies à traiter et qui sont utilisés chacun pour le calcul d'un filtre différent, ladite pile de pointeurs étant reliée par un soustracteur (146) destiné à décrémenter le pointeur sélectionné à chaque cycle, à un multiplexeur (147) commandé par l'état zéro de la sortie du soustracteur (146), un additionneur (148) relié à ladite pile de pointeurs (145) et à un décompteur (149) qui permet de contrôler la durée de la séquence de calcul d'un filtre ayant un nombre de coefficients déterminé.

FIG.1

FIG.2

FIG.3

FIG_4

FIG_5

## FIG_6

FIG_7

FIG.8

FIG_9

Fin Cakul

Data base address

Coefficient base address

Number of cycle

Command CPU

## FIG.10

## FIG.11

Raster    32 IT    125 μs

| 0 | 1 | 2 | 3 | 4 | 5 | 6 | 7 | | 28 | 29 | 30 | 31 | 0 | 1 | 2 | 3 |

7 | 0 | 1 | 2 3 | 4 | 5 6 7 | 0

IT   8 bits 3,8 μs

## FIG.12

IT

5 | 6    5

Raster   125 μs

8KH₃

16 KH₃

32 KH₃

62,5 μs

31,25 μs

1 à 6    3    2 à 5    3    1 à 6

5520 ns   720 ns   3060 ns   720 ns

Samples

| 1 | 2 | | 7 | 8 | 9 | 10 | 11 |

R1 ▮ 8                        ▮ 32                    ▮ 16

R2        ▮ 8                        ▮ 32                    ▮ 16

R3              ▮ 8                        ▮ 32

R4                    ▮ 8                        ▮ 32

L1  ⌐1à6      5520⌐

Line  2      ⌐1à6      5520⌐

Line  3           ⌐1à5    4200⌐  ⌐6⌐        ⌐3⌐

Line  4                     ⌐12⌐  1860  ⌐3à6 3660⌐   ⌐3⌐   ⌐3⌐   ⌐2à5⌐   ⌐3⌐

## FIG_13

EP 0 327 471 B1

FIG_14

FIG_15

FIG.16a

FIG.16b

FIG.16c

**FIG.17**

**FIG.18**

EP 0 327 471 B1

# FIG.19

## FIG_20

FIG.21

EP 0 327 471 B1

FIG.22

FIG.23

FIG.24

FIG. 25

FIG. 26

CP(2-0)

C -CY(3-0)

INIT

∅

A₂ A₀

C·ARD(9-3)

End calculation

FIG_27

φ1

A₂_A₀

DEC

EOC

FIG_28

EP 0 327 471 B1

FIG. 29

FIG. 30